# EUROPEAN PATENT SPECIFICATION

(11) **EP 2 896 247 B1**
(45) Date of publication and mention of the grant of the patent: **19.02.2020**
(21) Application number: 13770586.9
(22) Date of filing: 13.09.2013
(51) Int. Cl.: H04W 36/00, H04W 36/36

(54) **METHODS FOR MOBILITY CONTROL FOR WI-FI OFFLOADING IN WIRELESS SYSTEMS**
VERFAHREN ZUR MOBILITÄTSSTEUERUNG FÜR WIFI-OFFLOAD IN DRAHTLOSEN SYSTEMEN
PROCÉDÉS POUR LA COMMANDE DE MOBILITÉ POUR LE TRANSFERT PAR WI-FI DANS DES SYSTÈMES SANS FIL

(30) Priority: 14.09.2012 US 201261701023 P; 13.03.2013 US 201361780019 P
(43) Date of publication of application: 22.07.2015
(73) Proprietor: Interdigital Patent Holdings, Inc., Wilmington, DE 19809 (US)
(72) Inventor: WANG, Guanzhou, Brossard, Quebec J4Z 3S7 (CA); PANI, Diana, Montreal, QC H3C 1Y9 (CA); PELLETIER, Ghyslain, Laval, QC H7M 3J3 (CA); WATFA, Mahmoud, Saint Leonard, QC H1S 2B3 (CA)
(74) Representative: AWA Sweden AB
(86) International application number: PCT/US2013/059705
(87) International publication number: WO 2014/043500

(56) References cited:
- WO-A1-2013/052805
- WO-A1-2013/138708
- US-A1- 2007 140 163
- US-A1- 2011 222 523
- US-A1- 2012 178 448
- INTEL CORPORATION: "RAN Enhancements for 3GPP/WLAN Interworking Study Item Proposal", 3GPP DRAFT; R3-121847-WLAN-INTERWORKING-DISCUSSION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. Qingdao, China; 20120813 - 20120817 3 August 2012 (2012-08-03), XP050669551, Retrieved from the Internet: URL:http://www.3gpp.org/ftp/tsg_ran/WG3_Iu /TSGR3_77/Docs/ [retrieved on 2012-08-03]

## Description

### BACKGROUND

For the last few decades, there has been an increasing demand for data and data delivery capacity of mobile networks. With an ever increasing number of mobile devices, e.g., mobile phones, tablet devices, laptops, etc., the total spectral capacity, e.g., as per Cooper's law, continues to rise. In order to meet the increasing demand of mobile network bandwidth, mobile network operators may resort to other radio access technologies. With widespread and cost effective deployments of access technologies (e.g., Wi-Fi) available, mobile network operators may consider ways to offload mobile data traffic to such cost effective Wi-Fi networks.

In one or more deployments, a WTRU capable of connecting to a cellular network and a Wi-Fi network may have control over Wi-Fi APs that the WTRU may use for association. With insufficient information about which AP may facilitate Wi-Fi offloading, the WTRU, by itself, may control one or more Wi-Fi operations including, e.g., scanning, association, etc. Such WTRU controlled operations may result in waste of WTRUs resources.

Document US2011/222523 discloses a method of multi-radio interworking for providing cellular and WLAN access, wherein a cellular base station obtains measurements of WLAN APs from a UE and forwards this info to another UE for assisting it to connect to both cellular and WLAN. The forwarded info contains scanning info, WLAN QoS info, WLAN layer3 info.

Document US2012/178448 discloses cellular and WLAN interworking wherein the UE requests a base station an access to an AP; the BTS sends a response comprising information on candidate APs, i.e. assisting in measuring/scanning the WLAN APs, that can be accessed by the UE according to its location, battery, etc.; the UE scans based on the said response and reports the measurement result to the BTS; BTS then sends the UE detailed info for accessing the AP.

Document Intel: "RAN Enhancements for 3GPP/WLAN Interworking study Item Proposal", R3-121847 discloses RAN enhancements for 3GPP/WLAN interworking and in particular the ongoing discussion about ANDSF support, wherein the operator provides policies and WLAN access information to the UE, to be used for both seamless and non-seamless WLAN offload. It proposes ANDSF for efficient network discovery and UE battery life improvements related to WLAN scan.

### SUMMARY

The present invention relates to a method and a wireless transmit/receive unit as set forth in claims 1 and 8. Further embodiments are set forth in the dependent claims.

### BRIEF DESCRIPTION OF THE DRAWINGS

A more detailed understanding may be had from the following description, given by way of example in conjunction with the accompanying drawings.
FIG. 1A is a system diagram of an example communications system in which one or more disclosed embodiments may be implemented.
FIG. 1B is a system diagram of an example wireless transmit/receive unit (WTRU) that may be used within the communications system illustrated in FIG. 1A.
FIG. 1C is a system diagram of an example radio access network and an example core network that may be used within the communications system illustrated in FIG. 1A.
FIG 1D is a system diagram of another example radio access network and an example core network that may be used within the communications system illustrated in FIG. 1A.
FIG. 1E is a system diagram of another example radio access network and an example core network that may be used within the communications system illustrated in FIG. 1A.
FIG. 2 illustrates exemplary reference architecture of a Third Generation Partnership Project Core Network (3GPP CN) with a Wi-Fi offload.
FIG. 3 illustrates exemplary reference architecture of a 3GPP radio access network (RAN) with Wi-Fi offload.
FIG. 4 illustrates exemplary Wi-Fi offload access/release, e.g., when a WTRU may move in or out of Wi-Fi coverage.
FIG. 5 illustrates exemplary connected Wi-Fi mobility.
FIG. 6 illustrates exemplary 3GPP mobility combined with Wi-Fi offload setup and/or release.
FIG. 7 illustrates exemplary 3GPP mobility with connected Wi-Fi offload.
FIG. 8 illustrates exemplary 3GPP mobility event combined with Wi-Fi offload mobility.
FIG. 9 illustrates exemplary simple full duplex single channel communication system.
FIG. 10 illustrates exemplary block diagram of Wi-Fi pre-authentication system, e.g., using a 3GPP RAN.
FIG. 11 illustrates exemplary Wi-Fi pre-authentication, e.g., using a 3GPP network.
FIG. 12 illustrates exemplary 3GPP controlled Wi-Fi offloading.
FIG. 13 illustrates exemplary connection of a Wi-Fi Information Server (WIS) to an MME.

### DETAILED DESCRIPTION

A detailed description of illustrative embodiments will now be described with reference to the various figures. Although this description provides a detailed example of possible implementations, it should be noted that the details are intended to be exemplary and in no way limit the scope of the application. In addition, the figures may illustrate flow charts, which are meant to be exemplary. Other embodiments may be used. The order of the messages may be varied where appropriate. Messages may be omitted if not needed, and, additional flows may be added.

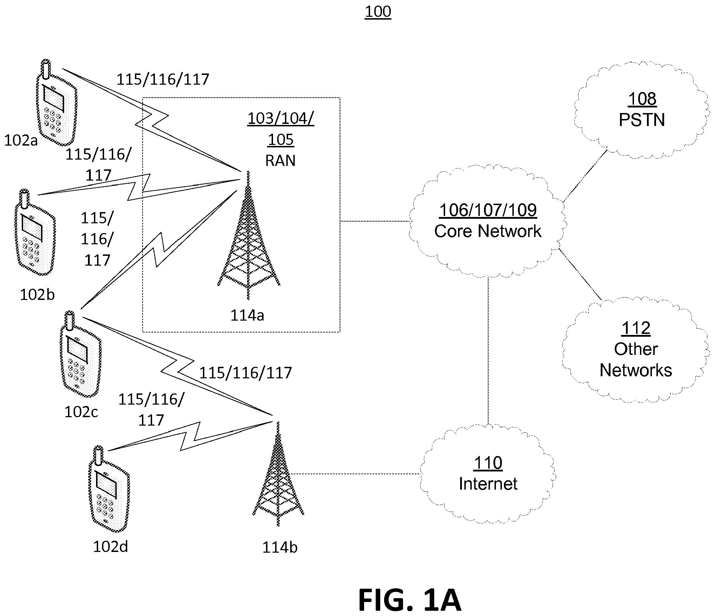

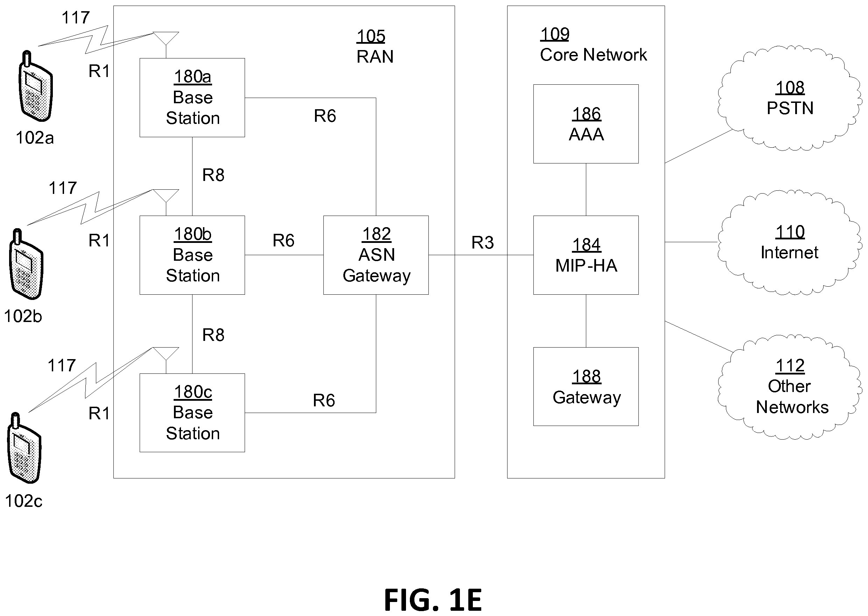

FIG. 1A is a diagram of an example communications system 100 in which one or more disclosed embodiments may be implemented. The communications system 100 may be a multiple access system that provides content, such as voice, data, video, messaging, broadcast, etc., to multiple wireless users. The communications system 100 may enable multiple wireless users to access such content through the sharing of system resources, including wireless bandwidth. For example, the communications systems 100 may employ one or more channel access methods, such as code division multiple access (CDMA), time division multiple access (TDMA), frequency division multiple access (FDMA), orthogonal FDMA (OFDMA), single-carrier FDMA (SC-FDMA), and the like.

As shown in FIG. 1A, the communications system 100 may include wireless transmit/receive units (WTRUs) 102a, 102b, 102c, and/or 102d (which generally or collectively may be referred to as WTRU 102), a radio access network (RAN) 103/104/105, a core network 106/107/109, a public switched telephone network (PSTN) 108, the Internet 110, and other networks 112, though it will be appreciated that the disclosed embodiments contemplate any number of WTRUs, base stations, networks, and/or network elements. Each of the WTRUs 102a, 102b, 102c, 102d may be any type of device configured to operate and/or communicate in a wireless environment. By way of example, the WTRUs 102a, 102b, 102c, 102d may be configured to transmit and/or receive wireless signals and may include wireless transmit/receive unit (WTRU), a mobile station, a fixed or mobile subscriber unit, a pager, a cellular telephone, a personal digital assistant (PDA), a smartphone, a laptop, a netbook, a personal computer, a wireless sensor, consumer electronics, and the like.

The communications systems 100 may also include a base station 114a and a base station 114b. Each of the base stations 114a, 114b may be any type of device configured to wirelessly interface with at least one of the WTRUs 102a, 102b, 102c, 102d to facilitate access to one or more communication networks, such as the core network 106/107/109, the Internet 110, and/or the networks 112. By way of example, the base stations 114a, 114b may be a base transceiver station (BTS), a Node-B, an eNode B, a Home Node B, a Home eNode B, a site controller, an access point (AP), a wireless router, and the like. While the base stations 114a, 114b are each depicted as a single element, it will be appreciated that the base stations 114a, 114b may include any number of interconnected base stations and/or network elements.

The base station 114a may be part of the RAN 103/104/105, which may also include other base stations and/or network elements (not shown), such as a base station controller (BSC), a radio network controller (RNC), relay nodes, etc. The base station 114a and/or the base station 114b may be configured to transmit and/or receive wireless signals within a particular geographic region, which may be referred to as a cell (not shown). The cell may further be divided into cell sectors. For example, the cell associated with the base station 114a may be divided into three sectors. Thus, in one embodiment, the base station 114a may include three transceivers, i.e., one for each sector of the cell. In an embodiment, the base station 114a may employ multiple-input multiple output (MIMO) technology and, therefore, may utilize multiple transceivers for each sector of the cell.

The base stations 114a, 114b may communicate with one or more of the WTRUs 102a, 102b, 102c, 102d over an air interface 115/116/117, which may be any suitable wireless communication link (e.g., radio frequency (RF), microwave, infrared (IR), ultraviolet (UV), visible light, etc.). The air interface 115/116/117 may be established using any suitable radio access technology (RAT).

More specifically, as noted above, the communications system 100 may be a multiple access system and may employ one or more channel access schemes, such as CDMA, TDMA, FDMA, OFDMA, SC-FDMA, and the like. For example, the base station 114a in the RAN 103/104/105 and the WTRUs 102a, 102b, 102c may implement a radio technology such as Universal Mobile Telecommunications System (UMTS) Terrestrial Radio Access (UTRA), which may establish the air interface 115/116/117 using wideband CDMA (WCDMA). WCDMA may include communication protocols such as High-Speed Packet Access (HSPA) and/or Evolved HSPA (HSPA+). HSPA may include High-Speed Downlink Packet Access (HSDPA) and/or High-Speed Uplink Packet Access (HSUPA).

In an embodiment, the base station 114a and the WTRUs 102a, 102b, 102c may implement a radio technology such as Evolved UMTS Terrestrial Radio Access (E-UTRA), which may establish the air interface 115/116/117 using Long Term Evolution (LTE) and/or LTE-Advanced (LTE-A).

In an embodiment, the base station 114a and the WTRUs 102a, 102b, 102c may implement radio technologies such as IEEE 802.16 (i.e., Worldwide Interoperability for Microwave Access (WiMAX)), CDMA2000, CDMA2000 IX, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

The base station 114b in FIG. 1A may be a wireless router, Home Node B, Home eNode B, or access point, for example, and may utilize any suitable RAT for facilitating wireless connectivity in a localized area, such as a place of business, a home, a vehicle, a campus, and the like. In one embodiment, the base station 114b and the WTRUs 102c, 102d may implement a radio technology such as IEEE 802.11 to establish a wireless local area network (WLAN). In an embodiment, the base station 114b and the WTRUs 102c, 102d may implement a radio technology such as IEEE 802.15 to establish a wireless personal area network (WPAN). In yet an embodiment, the base station 114b and the WTRUs 102c, 102d may utilize a cellular-based RAT (e.g., WCDMA, CDMA2000, GSM, LTE, LTE-A, etc.) to establish a picocell or femtocell. As shown in FIG. 1A, the base station 114b may have a direct connection to the Internet 110. Thus, the base station 114b may not be required to access the Internet 110 via the core network 106/107/109.

The RAN 103/104/105 may be in communication with the core network 106/107/109, which may be any type of network configured to provide voice, data, applications, and/or voice over internet protocol (VoIP) services to one or more of the WTRUs 102a, 102b, 102c, 102d. For example, the core network 106/107/109 may provide call control, billing services, mobile location-based services, pre-paid calling, Internet connectivity, video distribution, etc., and/or perform high-level security functions, such as user authentication. Although not shown in FIG. 1A, it will be appreciated that the RAN 103/104/105 and/or the core network 106/107/109 may be in direct or indirect communication with other RANs that employ the same RAT as the RAN 103/104/105 or a different RAT. For example, in addition to being connected to the RAN 103/104/105, which may be utilizing an E-UTRA radio technology, the core network 106/107/109 may also be in communication with a RAN (not shown) employing a GSM radio technology.

The core network 106/107/109 may also serve as a gateway for the WTRUs 102a, 102b, 102c, 102d to access the PSTN 108, the Internet 110, and/or other networks 112. The PSTN 108 may include circuit-switched telephone networks that provide plain old telephone service (POTS). The Internet 110 may include a global system of interconnected computer networks and devices that use common communication protocols, such as the transmission control protocol (TCP), user datagram protocol (UDP) and the internet protocol (IP) in the TCP/IP internet protocol suite. The networks 112 may include wired or wireless communications networks owned and/or operated by other service providers. For example, the networks 112 may include a core network connected to one or more RANs, which may employ the same RAT as the RAN 103/104/105 or a different RAT.

Some or all of the WTRUs 102a, 102b, 102c, 102d in the communications system 100 may include multi-mode capabilities, i.e., the WTRUs 102a, 102b, 102c, 102d may include multiple transceivers for communicating with different wireless networks over different wireless links. For example, the WTRU 102c shown in FIG. 1A may be configured to communicate with the base station 114a, which may employ a cellular-based radio technology, and with the base station 114b, which may employ an IEEE 802 radio technology.

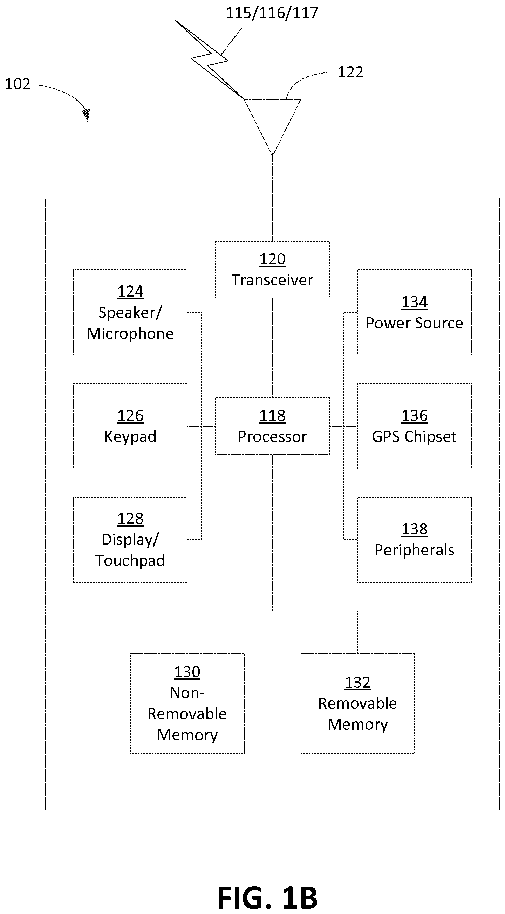

FIG. 1B is a system diagram of an example WTRU 102. As shown in FIG. 1B, the WTRU 102 may include a processor 118, a transceiver 120, a transmit/receive element 122, a speaker/microphone 124, a keypad 126, a display/touchpad 128, non-removable memory 130, removable memory 132, a power source 134, a global positioning system (GPS) chipset 136, and other peripherals 138. It will be appreciated that the WTRU 102 may include any subcombination of the foregoing elements while remaining consistent with an embodiment. Also, embodiments contemplate that the base stations 114a and 114b, and/or the nodes that base stations 114a and 114b may represent, such as but not limited to transceiver station (BTS), a Node-B, a site controller, an access point (AP), a home node-B, an evolved home node-B (eNodeB), a home evolved node-B (HeNB), a home evolved node-B gateway, and proxy nodes, among others, may include some or each of the elements depicted in FIG. 1B and described herein.

The processor 118 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Array (FPGAs) circuits, any other type of integrated circuit (IC), a state machine, and the like. The processor 118 may perform signal coding, data processing, power control, input/output processing, and/or any other functionality that enables the WTRU 102 to operate in a wireless environment. The processor 118 may be coupled to the transceiver 120, which may be coupled to the transmit/receive element 122. While FIG. 1B depicts the processor 118 and the transceiver 120 as separate components, it will be appreciated that the processor 118 and the transceiver 120 may be integrated together in an electronic package or chip.

The transmit/receive element 122 may be configured to transmit signals to, or receive signals from, a base station (e.g., the base station 114a) over the air interface 115/116/117. For example, in one embodiment, the transmit/receive element 122 may be an antenna configured to transmit and/or receive RF signals. In an embodiment, the transmit/receive element 122 may be an emitter/detector configured to transmit and/or receive IR, UV, or visible light signals, for example. In yet an embodiment, the transmit/receive element 122 may be configured to transmit and receive both RF and light signals. It will be appreciated that the transmit/receive element 122 may be configured to transmit and/or receive any combination of wireless signals.

In addition, although the transmit/receive element 122 is depicted in FIG. 1B as a single element, the WTRU 102 may include any number of transmit/receive elements 122. More specifically, the WTRU 102 may employ MIMO technology. Thus, in one embodiment, the WTRU 102 may include two or more transmit/receive elements 122 (e.g., multiple antennas) for transmitting and receiving wireless signals over the air interface 115/116/117.

The transceiver 120 may be configured to modulate the signals that are to be transmitted by the transmit/receive element 122 and to demodulate the signals that are received by the transmit/receive element 122. As noted above, the WTRU 102 may have multi-mode capabilities. Thus, the transceiver 120 may include multiple transceivers for enabling the WTRU 102 to communicate via multiple RATs, such as UTRA and IEEE 802.11, for example.

The processor 118 of the WTRU 102 may be coupled to, and may receive user input data from, the speaker/microphone 124, the keypad 126, and/or the display/touchpad 128 (e.g., a liquid crystal display (LCD) display unit or organic light-emitting diode (OLED) display unit). The processor 118 may also output user data to the speaker/microphone 124, the keypad 126, and/or the display/touchpad 128. In addition, the processor 118 may access information from, and store data in, any type of suitable memory, such as the non-removable memory 130 and/or the removable memory 132. The non-removable memory 130 may include random-access memory (RAM), read-only memory (ROM), a hard disk, or any other type of memory storage device. The removable memory 132 may include a subscriber identity module (SIM) card, a memory stick, a secure digital (SD) memory card, and the like. In an embodiment, the processor 118 may access information from, and store data in, memory that is not physically located on the WTRU 102, such as on a server or a home computer (not shown).

The processor 118 may receive power from the power source 134, and may be configured to distribute and/or control the power to the other components in the WTRU 102. The power source 134 may be any suitable device for powering the WTRU 102. For example, the power source 134 may include one or more dry cell batteries (e.g., nickel-cadmium (NiCd), nickel-zinc (NiZn), nickel metal hydride (NiMH), lithium-ion (Li-ion), etc.), solar cells, fuel cells, and the like.

The processor 118 may also be coupled to the GPS chipset 136, which may be configured to provide location information (e.g., longitude and latitude) regarding the current location of the WTRU 102. In addition to, or in lieu of, the information from the GPS chipset 136, the WTRU 102 may receive location information over the air interface 115/116/117 from a base station (e.g., base stations 114a, 114b) and/or determine its location based on the timing of the signals being received from two or more nearby base stations. It will be appreciated that the WTRU 102 may acquire location information by way of any suitable location-determination method while remaining consistent with an embodiment.

The processor 118 may further be coupled to other peripherals 138, which may include one or more software and/or hardware modules that provide additional features, functionality and/or wired or wireless connectivity. For example, the peripherals 138 may include an accelerometer, an e-compass, a satellite transceiver, a digital camera (for photographs or video), a universal serial bus (USB) port, a vibration device, a television transceiver, a hands free headset, a Bluetooth® module, a frequency modulated (FM) radio unit, a digital music player, a media player, a video game player module, an Internet browser, and the like.

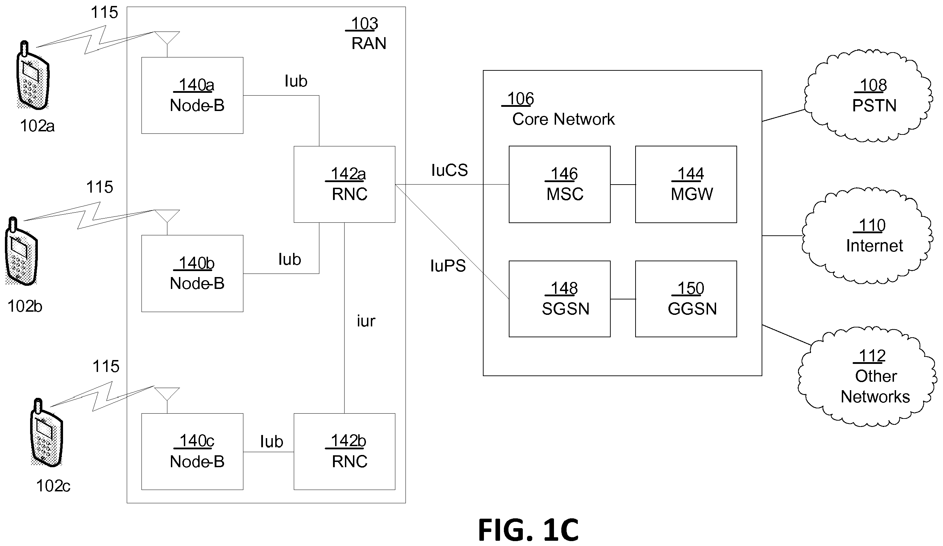

FIG. 1C is a system diagram of the RAN 103 and the core network 106 according to an embodiment. As noted above, the RAN 103 may employ a UTRA radio technology to communicate with the WTRUs 102a, 102b, 102c over the air interface 115. The RAN 103 may also be in communication with the core network 106. As shown in FIG. 1C, the RAN 103 may include Node-Bs 140a, 140b, 140c, which may each include one or more transceivers for communicating with the WTRUs 102a, 102b, 102c over the air interface 115. The Node-Bs 140a, 140b, 140c may each be associated with a particular cell (not shown) within the RAN 103. The RAN 103 may also include RNCs 142a, 142b. It will be appreciated that the RAN 103 may include any number of Node-Bs and RNCs while remaining consistent with an embodiment.

As shown in FIG. 1C, the Node-Bs 140a, 140b may be in communication with the RNC 142a. Additionally, the Node-B 140c may be in communication with the RNC 142b. The Node-Bs 140a, 140b, 140c may communicate with the respective RNCs 142a, 142b via an Iub interface. The RNCs 142a, 142b may be in communication with one another via an Iur interface. Each of the RNCs 142a, 142b may be configured to control the respective Node-Bs 140a, 140b, 140c to which it is connected. In addition, each of the RNCs 142a, 142b may be configured to carry out or support other functionality, such as outer loop power control, load control, admission control, packet scheduling, handover control, macro diversity, security functions, data encryption, and the like.

The core network 106 shown in FIG. 1C may include a media gateway (MGW) 144, a mobile switching center (MSC) 146, a serving GPRS support node (SGSN) 148, and/or a gateway GPRS support node (GGSN) 150. While each of the foregoing elements are depicted as part of the core network 106, it will be appreciated that any one of these elements may be owned and/or operated by an entity other than the core network operator.

The RNC 142a in the RAN 103 may be connected to the MSC 146 in the core network 106 via an IuCS interface. The MSC 146 may be connected to the MGW 144. The MSC 146 and the MGW 144 may provide the WTRUs 102a, 102b, 102c with access to circuit-switched networks, such as the PSTN 108, to facilitate communications between the WTRUs 102a, 102b, 102c and traditional land-line communications devices.

The RNC 142a in the RAN 103 may also be connected to the SGSN 148 in the core network 106 via an IuPS interface. The SGSN 148 may be connected to the GGSN 150. The SGSN 148 and the GGSN 150 may provide the WTRUs 102a, 102b, 102c with access to packet-switched networks, such as the Internet 110, to facilitate communications between and the WTRUs 102a, 102b, 102c and IP-enabled devices.

As noted above, the core network 106 may also be connected to the networks 112, which may include other wired or wireless networks that are owned and/or operated by other service providers.

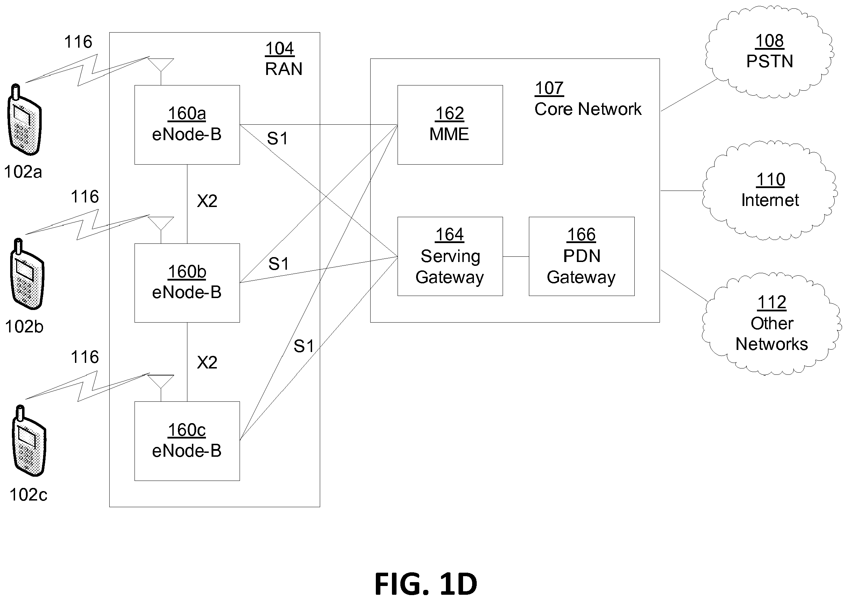

FIG. 1D is a system diagram of the RAN 104 and the core network 107 according to an embodiment. As noted above, the RAN 104 may employ an E-UTRA radio technology to communicate with the WTRUs 102a, 102b, 102c over the air interface 116. The RAN 104 may also be in communication with the core network 107.

The RAN 104 may include eNode-Bs 160a, 160b, 160c, though it will be appreciated that the RAN 104 may include any number of eNode-Bs while remaining consistent with an embodiment. The eNode-Bs 160a, 160b, 160c may each include one or more transceivers for communicating with the WTRUs 102a, 102b, 102c over the air interface 116. In one embodiment, the eNode-Bs 160a, 160b, 160c may implement MIMO technology. Thus, the eNode-B 160a, for example, may use multiple antennas to transmit wireless signals to, and receive wireless signals from, the WTRU 102a.

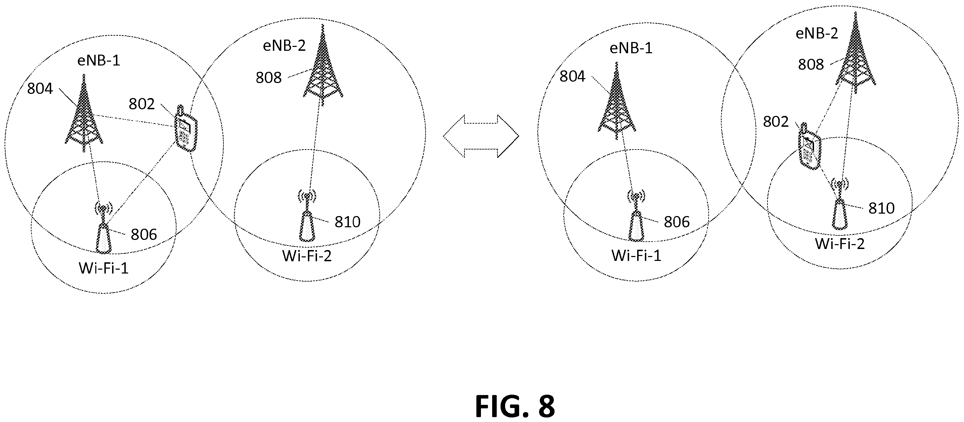

Each of the eNode-Bs 160a, 160b, 160c may be associated with a particular cell (not shown) and may be configured to handle radio resource management decisions, handover decisions, scheduling of users in the uplink and/or downlink, and the like. As shown in FIG.8D, the eNode-Bs 160a, 160b, 160c may communicate with one another over an X2 interface.

The core network 107 shown in FIG.8D may include a mobility management gateway (MME) 162, a serving gateway 164, and a packet data network (PDN) gateway 166. While each of the foregoing elements are depicted as part of the core network 107, it will be appreciated that any one of these elements may be owned and/or operated by an entity other than the core network operator.

The MME 162 may be connected to each of the eNode-Bs 160a, 160b, 160c in the RAN 104 via an S1 interface and may serve as a control node. For example, the MME 162 may be responsible for authenticating users of the WTRUs 102a, 102b, 102c, bearer activation/deactivation, selecting a particular serving gateway during an initial attach of the WTRUs 102a, 102b, 102c, and the like. The MME 162 may also provide a control plane function for switching between the RAN 104 and other RANs (not shown) that employ other radio technologies, such as GSM or WCDMA.

The serving gateway 164 may be connected to each of the eNode-Bs 160a, 160b, 160c in the RAN 104 via the S1 interface. The serving gateway 164 may generally route and forward user data packets to/from the WTRUs 102a, 102b, 102c. The serving gateway 164 may also perform other functions, such as anchoring user planes during inter-eNode B handovers, triggering paging when downlink data is available for the WTRUs 102a, 102b, 102c, managing and storing contexts of the WTRUs 102a, 102b, 102c, and the like.

The serving gateway 164 may also be connected to the PDN gateway 166, which may provide the WTRUs 102a, 102b, 102c with access to packet-switched networks, such as the Internet 110, to facilitate communications between the WTRUs 102a, 102b, 102c and IP-enabled devices.

The core network 107 may facilitate communications with other networks. For example, the core network 107 may provide the WTRUs 102a, 102b, 102c with access to circuit-switched networks, such as the PSTN 108, to facilitate communications between the WTRUs 102a, 102b, 102c and traditional land-line communications devices. For example, the core network 107 may include, or may communicate with, an IP gateway (e.g., an IP multimedia subsystem (IMS) server) that serves as an interface between the core network 107 and the PSTN 108. In addition, the core network 107 may provide the WTRUs 102a, 102b, 102c with access to the networks 112, which may include other wired or wireless networks that are owned and/or operated by other service providers.

FIG. IE is a system diagram of the RAN 105 and the core network 109 according to an embodiment. The RAN 105 may be an access service network (ASN) that employs IEEE 802.16 radio technology to communicate with the WTRUs 102a, 102b, 102c over the air interface 117. As will be further discussed below, the communication links between the different functional entities of the WTRUs 102a, 102b, 102c, the RAN 105, and the core network 109 may be defined as reference points.

As shown in FIG. IE, the RAN 105 may include base stations 180a, 180b, 180c, and an ASN gateway 182, though it will be appreciated that the RAN 105 may include any number of base stations and ASN gateways while remaining consistent with an embodiment. The base stations 180a, 180b, 180c may each be associated with a particular cell (not shown) in the RAN 105 and may each include one or more transceivers for communicating with the WTRUs 102a, 102b, 102c over the air interface 117. In one embodiment, the base stations 180a, 180b, 180c may implement MIMO technology. Thus, the base station 180a, for example, may use multiple antennas to transmit wireless signals to, and receive wireless signals from, the WTRU 102a. The base stations 180a, 180b, 180c may also provide mobility management functions, such as handoff triggering, tunnel establishment, radio resource management, traffic classification, quality of service (QoS) policy enforcement, and the like. The ASN gateway 182 may serve as a traffic aggregation point and may be responsible for paging, caching of subscriber profiles, routing to the core network 109, and the like.

The air interface 117 between the WTRUs 102a, 102b, 102c and the RAN 105 may be defined as an R1 reference point that implements the IEEE 802.16 specification. In addition, each of the WTRUs 102a, 102b, 102c may establish a logical interface (not shown) with the core network 109. The logical interface between the WTRUs 102a, 102b, 102c and the core network 109 may be defined as an R2 reference point, which may be used for authentication, authorization, IP host configuration management, and/or mobility management.

The communication link between each of the base stations 180a, 180b, 180c may be defined as an R8 reference point that includes protocols for facilitating WTRU handovers and the transfer of data between base stations. The communication link between the base stations 180a, 180b, 180c and the ASN gateway 182 may be defined as an R6 reference point. The R6 reference point may include protocols for facilitating mobility management based on mobility events associated with each of the WTRUs 102a, 102b, 102c.

As shown in FIG. IE, the RAN 105 may be connected to the core network 109. The communication link between the RAN 105 and the core network 109 may defined as an R3 reference point that includes protocols for facilitating data transfer and mobility management capabilities, for example. The core network 109 may include a mobile IP home agent (MIP-HA) 184, an authentication, authorization, accounting (AAA) server 186, and a gateway 188. While each of the foregoing elements are depicted as part of the core network 109, it will be appreciated that any one of these elements may be owned and/or operated by an entity other than the core network operator.

The MIP-HA may be responsible for IP address management, and may enable the WTRUs 102a, 102b, 102c to roam between different ASNs and/or different core networks. The MIP-HA 184 may provide the WTRUs 102a, 102b, 102c with access to packet-switched networks, such as the Internet 110, to facilitate communications between the WTRUs 102a, 102b, 102c and IP-enabled devices. The AAA server 186 may be responsible for user authentication and for supporting user services. The gateway 188 may facilitate interworking with other networks. For example, the gateway 188 may provide the WTRUs 102a, 102b, 102c with access to circuit-switched networks, such as the PSTN 108, to facilitate communications between the WTRUs 102a, 102b, 102c and traditional land-line communications devices. In addition, the gateway 188 may provide the WTRUs 102a, 102b, 102c with access to the networks 112, which may include other wired or wireless networks that are owned and/or operated by other service providers.

Although not shown in FIG. IE, it will be appreciated that the RAN 105 may be connected to other ASNs and the core network 109 may be connected to other core networks. The communication link between the RAN 105 the other ASNs may be defined as an R4 reference point, which may include protocols for coordinating the mobility of the WTRUs 102a, 102b, 102c between the RAN 105 and the other ASNs. The communication link between the core network 109 and the other core networks may be defined as an R5 reference, which may include protocols for facilitating interworking between home core networks and visited core networks.

For a wireless local area network (WLAN) access, a cell may correspond to one or more channel(s). A channel may correspond to a frequency in a frequency band of the concerned Wi-Fi technology. A WLAN device may send a probing request for a service set identifier (SSIDs). A WLAN WTRU may establish an association with an access point before it may exchange data with a WLAN access node (AN). A WLAN AN may be referred to as WLAN access point (AP). The WLAN WTRU may perform one or more of the following actions. The WLAN WTRU may discover the available WLAN ANs, select one of the discovered ANs, perform authentication (e.g., if needed), and/or may associate with the access point. The WLAN WTRU may be synchronized with the WLAN AN, and may send and/or receive data frames.

A WLAN WTRU enabled to support an IEEE 802.11 standard may use scanning, for example, passive scanning and/or active scanning to discover available access points. The WLAN WTRU may determine a list of available WLAN ANs, for example, using active and/or passive scanning. A WLAN WTRU may connect to a WLAN AN, for example, based on a user input. A WLAN WTRU may automatically reconnect to a known WLAN AN.

Passive scanning of WLAN access points may be provided. In passive scanning, an access point may periodically broadcast a beacon signal which may be received by a WLAN WTRU to determine a number of parameters of the corresponding WLAN AN (e.g., SSID, supported rates, etc.) and/or received signal strength. The WLAN WTRU may collect information without transmitting a request, e.g., based on one or more signals that the WLAN WTRU may receive.

Active scanning of WLAN access points may be provided. A WLAN WTRU, while using active scanning, may transmit a broadcast frame (e.g., a probe request). One or more access points in the range of the WTRU may respond with a probe response. Active scanning of the WTRUs may incur additional overhead on the network for the transmission of probe signals on the shared medium.

WLAN service discovery, e.g., based on IEEE 802.11u may be provided. Service discovery may provide discovery and/or selection of WLAN APs. Service discovery, e.g., based on IEEE 802.11u, may indicate Network Discovery and/or Selection methods. A WLAN WTRU may receive additional information, e.g., through advertisement services prior to performing association with a WLAN access network (AN), e.g., using Generic Advertisement Service (GAS) transport protocol. GAS protocol may be used as a transport protocol for one or more advertisement protocols. GAS transmissions may be received by WLAN WTRUs in associated or unassociated state. The WLAN WTRU may determine that the WLAN AN supports 801.11u using an Interworking Element. The WLAN WTRU may post a query to a discovered SSID (e.g., using passive scanning or active scanning). The WLAN may receive from a WLAN AN a response, e.g., indicating operator-related parameters.

The discovery-related information may comprise one or more parameters including, e.g., Access Network Type, Roaming information, Venue information, etc. The Access Network Type may be designated by a value, e.g., in the range of 0 to 15. The Access Network Type may indicate that the network is a private network, a private network with guest access, a chargeable public network, a free public network, etc.

A WLAN WTRU may send a query to request selection-related information. The selection-related information may comprise one or more parameters including, e.g., Domain name, Credential type, or EAP methods, etc. The WLAN WTRU may determine the WLAN AN it may associate with, e.g., based on stored credentials and operator policies, user interactions, etc. Roaming agreements between different 802.11 may be implemented. A protocol (e.g., a Subscription Service Provider Network (SSPN) protocol) may support communication to the access point, such that user credentials and user policies may be communicated to the WLAN AN.

Multi-radio access technology (RAT) operation including Wi-Fi may be provided. For example, a WTRU may support multi-RAT CA using a 3GPP (e.g., HSPA or LTE) RAT and Wi-Fi RAT. Such a WTRU may perform an initial access to a network, e.g., using connection establishment procedures of a 3GPP RAT. The 3GPP RAT may correspond to a primary RAT of the WTRU's configuration. The WTRU may be configured with additional parameters and/or resources to access a WLAN AP. Such configuration may be performed using the RRC connection of the 3GPP RAT. The Wi-Fi RAT may correspond to a secondary RAT of the WTRU's configuration. For example Wi-Fi parameters that may be configured may include one or more of: a frequency band of the Wi-Fi network, a frequency (e.g. a Wi-Fi channel) of the Wi-Fi network, an operation mode for the Wi-Fi network (e.g. Direct-Sequence Spread Spectrum (DSSS), Orthogonal Frequency Division Multiplexing (OFDM)), an identity of the Wi-Fi network (e.g. an SSID), an identity of the Wi-Fi access point (e.g. a Basic service set ID (BSSID) and/or a MAC identity), or a set of one or more security parameters. The security parameters may include one or more of a security protocol, an encryption algorithm, or a security key. The configuration may also include an indication to turn on (e.g., activate) the Wi-Fi transceiver in the WTRU.

The type of security protocol may be one of a Wired Equivalent Privacy (WEP), Wi-Fi Protected Access (WPA) or WPA 2, or the like. The type of encryption algorithm may be one of a Temporal Key Integrity Protocol (TKIP), a Pre-Share Key mode (PSK), or the like. The security key may be a string of hexadecimal digits, a bitstring, and the like. The security key may correspond to information (e.g. a passphrase) from which a Wi-Fi device may further derive the encryption key using a key derivation function.

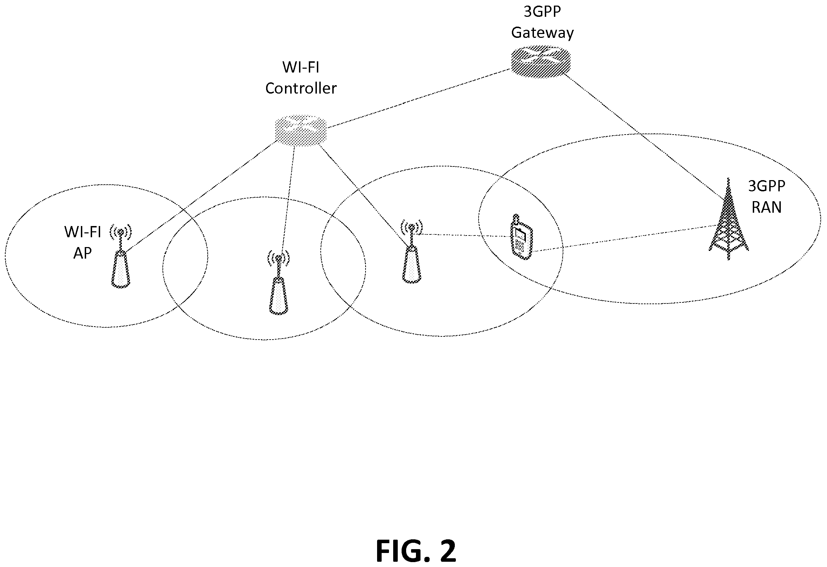

Connectivity between the WLAN access node (WLAN AN) and the 3GPP Core Network (3GPP CN) may be established. The 3GPP network may be referred to as a mobile communication network. Establishing such connectivity may include authentication, authorization, and/or establishment of a tunnel between the WLAN WTRU and the 3GPP core network (CN). WLAN access, which is a separate and independent access technology from other 3GPP access technologies (e.g. LTE, WCDMA/HSPA) may use the facilities of the 3GPP CN to provide capability for an operator to offer WLAN services including differentiated QoS and/or charging for the concerned data transfers. The switching of the traffic may be based on one or more operator's policies, and may be performed in the 3GPP core network (CN). FIG. 2 illustrates an example reference architecture of 3GPP CN and Wi-Fi offload.

The aforementioned techniques may have the following implications. A WLAN module may access a Universal Subscriber Identity Module (U)SIM of a WTRU. A WLAN radio interface may have support for 3GPP authentication signaling between a WLAN WTRU and a WLAN AN. A WLAN WTRU may be WLAN-Attached or WLAN-Detached in the 3GPP CN, e.g., as maintained by a 3GPP AAA Server. The WLAN WTRU may keep a state and may bind it to PDP ATTACH. A WLAN AP may be associated with one or more PLMN(s). A WLAN AN may set up packet filters to the WLAN WTRU. The filters may be received from a 3GPP AAA server. A WLAN WTRU may transmit a request message to the 3GPP CN to setup a tunnel between the WLAN WTRU and the Packet Data Gateway (PDG) in the 3GPP CN.

Systems, methods, and instrumentalities to implement Radio Access Network-based Wi-Fi Offload (e.g., 3GPP RAN and/or Wi-Fi Offload) may be provided. Support for interworking between WLAN AN and 3GPP accesses may allow a tighter integration between the two accesses and avoid the need for a duplicate 3GPP CN functionality. A form of carrier aggregation may be provided while minimizing changes to the WLAN AN and/or the WLAN air interface. An exemplary deployment scenario may include small 3GPP cells (e.g., pico, femto, relays) integrated with Wi-Fi radio, or Remote Radio Elements (RRHs) integrated with Wi-Fi radio.

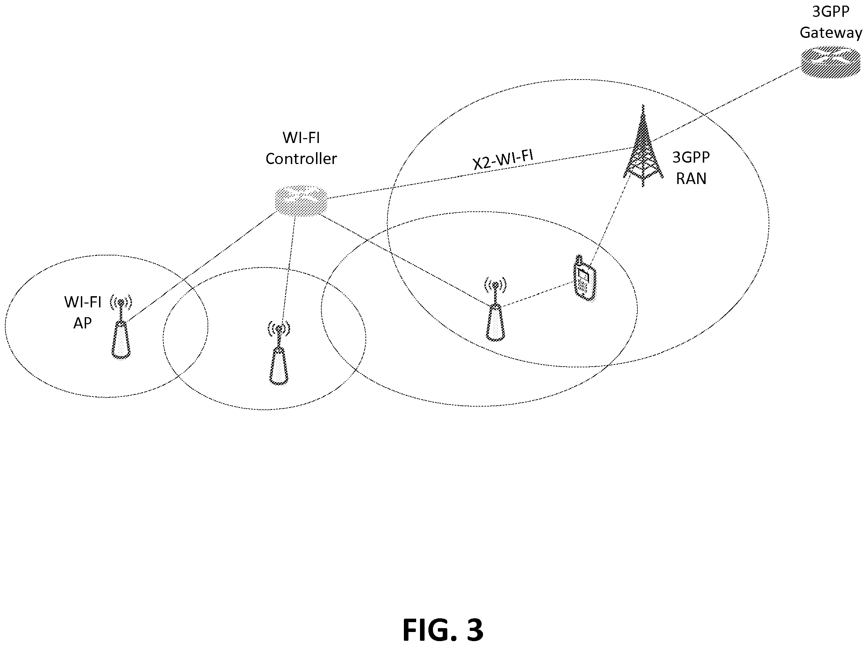

CN-based offloading may be provided. The CN-based offloading may include a form of aggregation, e.g., between 3GPP LTE and Wi-Fi, and/or HSPA and Wi-Fi. The 3GPP HSPA + Wi-Fi aggregation may require changes to the 3GPP RNC. The 3GPP RAN and/or Wi-Fi offload may be characterized by a split of the user plane data that may occur in the 3GPP RAN. FIG. 3 illustrates an exemplary reference architecture describing a 3GPP RAN and a Wi-Fi offload. As illustrated in FIG. 3, the 3GPP RAN and Wi-Fi offload may be achieved by using carrier aggregation between one or more 3GPP carriers and Wi-Fi carriers. In Wi-Fi offloading, a split in user data may occur in the 3GPP RAN, e.g., an offload interface (e.g., X2-WIFI interface 304). Carrier aggregation of one or more of 3GPP carrier(s) and one or more of Wi-Fi carrier(s) may be provided, e.g., at the MAC layer, which may be referred to as Wi-Fi aggregation.

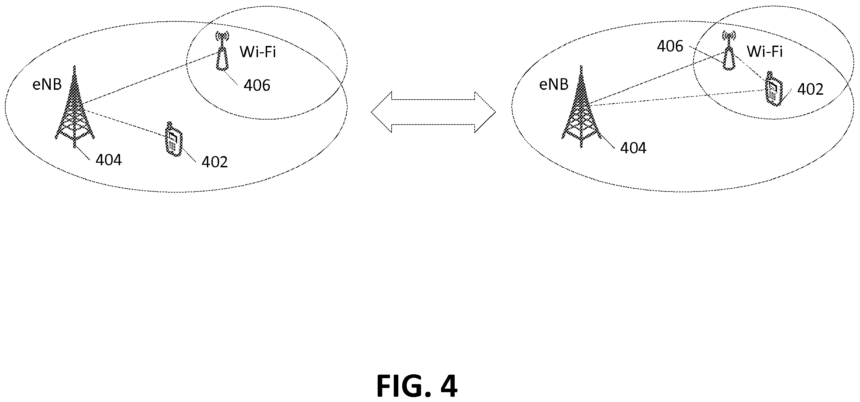

One or more Wi-Fi access networks may be provided that may include one or more of a Wi-Fi controlling function or one or more APs. A Wi-Fi controlling function may be integrated, co-located, or remote to the 3GPP RAN node (e.g., an eUTRA eNB, an MME, an UTRA Node B or a RNC). A Wi-Fi AP may be integrated, co-located or remote to the 3GPP RAN node (e.g., an eUTRA eNB, an MME, an UTRA Node B, or a RNC) and/or to a Wi-Fi controller. One or more 3GPP and/or Wi-Fi offloading exemplary mobility scenarios may be provided. The one or more exemplary mobility scenarios may be combined in part or in whole. In the exemplary mobility scenarios described herein, it may be assumed that the WTRU may be connected to a 3GPP network. The WTRU mobility between one or more Wi-Fi areas may be controlled by the 3GPP network. FIG. 4 to FIG. 8 may illustrate examples of 3GPP RAN and Wi-Fi offload architecture.

Wi-Fi Offload access and/or release (e.g., where a WTRU may move in or out of Wi-Fi coverage) may be provided. As illustrated in FIG. 4, a WTRU 402 may be connected with a 3GPP network 404, e.g., via an RRC connection. The WTRU 402 may not be connected to a Wi-Fi AP 406, or the WTRU 402 may be connected to a Wi-Fi AP that may not be used for Wi-Fi offload for the current RRC connection. As illustrated in FIG. 4, when the WTRU 402 moves into the coverage area of a Wi-Fi AP 406 that may be used for Wi-Fi offload, the WTRU 402 may initiate connection to the Wi-Fi AP 406. The WTRU 402 may initiate the connection autonomously and/or under the control of the 3GPP network.

A WTRU may be connected with a Wi-Fi AP, e.g., for offload. A WTRU may lose the Wi-Fi connection for the offload; the WTRU may remain connected to the 3GPP network, e.g., when the WTRU moves out of the coverage of the Wi-Fi AP and/or the WTRU is not within the coverage of another Wi-Fi AP that may be used for Wi-Fi offload.

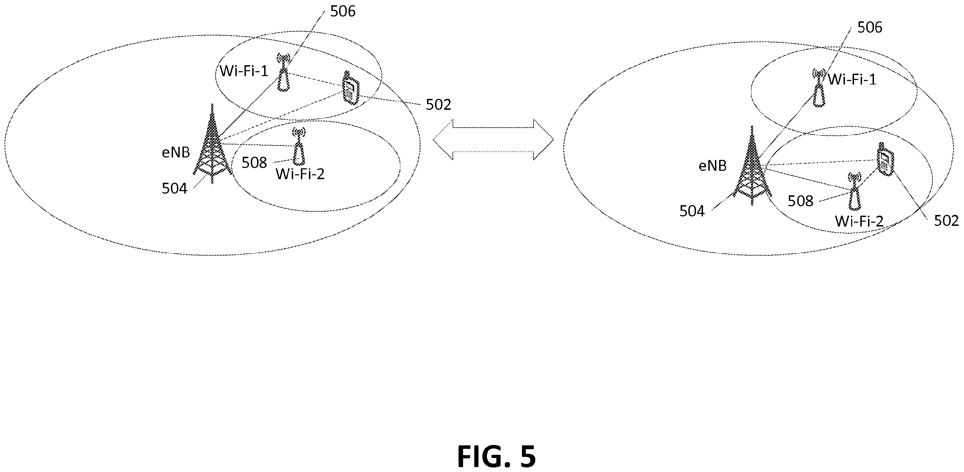

Connected Wi-Fi Mobility may be provided. As illustrated in FIG. 5, a WTRU 502 may be connected with a 3GPP network 504 and with a first Wi-Fi AP 506 for Wi-Fi offload. The WTRU 502 may move out of the coverage of the Wi-Fi AP 506 and into the coverage of a second Wi-Fi AP 508. The WTRU 502 may maintain or re-establish its Wi-Fi connection for Wi-Fi offload using the second Wi-Fi AP 508. The WTRU 502 may re-establish its Wi-Fi connection autonomously and/or under the control of the 3GPP network 504.

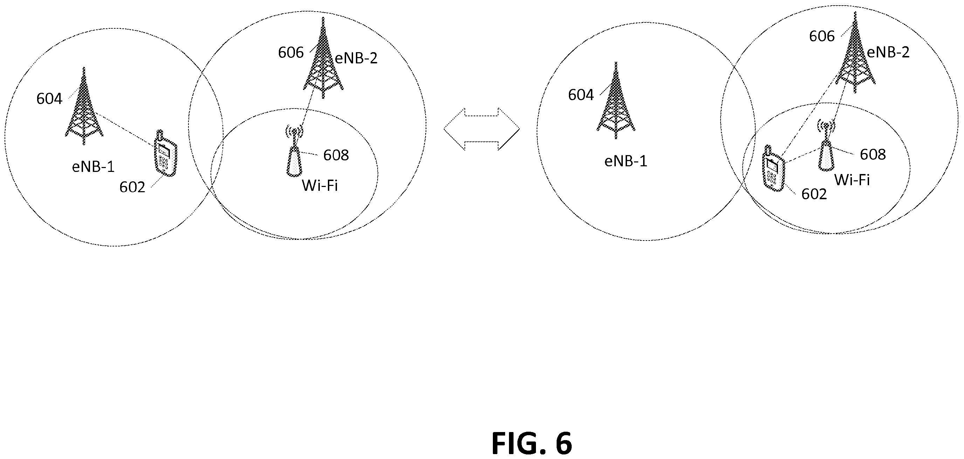

Setup and/or release of 3GPP mobility combined with Wi-Fi Offload may be provided. As illustrated in FIG. 6, a WTRU 602 may be connected to a first serving cell of a 3GPP network 604. The WTRU 602 may not be connected to a Wi-Fi AP, or, the WTRU 602 may be connected to a Wi-Fi AP that may not be used for Wi-Fi offload for the current RRC connection. When the WTRU 602 moves into the coverage area of a second serving cell of the 3GPP network 606, the WTRU 602 may move within the coverage area of a Wi-Fi AP 608 that may be used for Wi-Fi offload for the current RRC connection. The WTRU 602 may initiate a handover to the second serving cell of the 3GPP network 606. The WTRU 602 may initiate a connection to the Wi-Fi AP 608.

A WTRU may be connected to a Wi-Fi AP for Wi-Fi offload. When the WTRU moves into the coverage area of a second serving cell of the 3GPP network, the WTRU may move out of the coverage of the Wi-Fi AP and release the Wi-Fi connection. The WTRU may release the Wi-Fi connection, e.g., if the second serving cell of the 3GPP network does not support offload to the Wi-Fi AP, e.g., in case of 3GPP RAN and Wi-Fi offload.

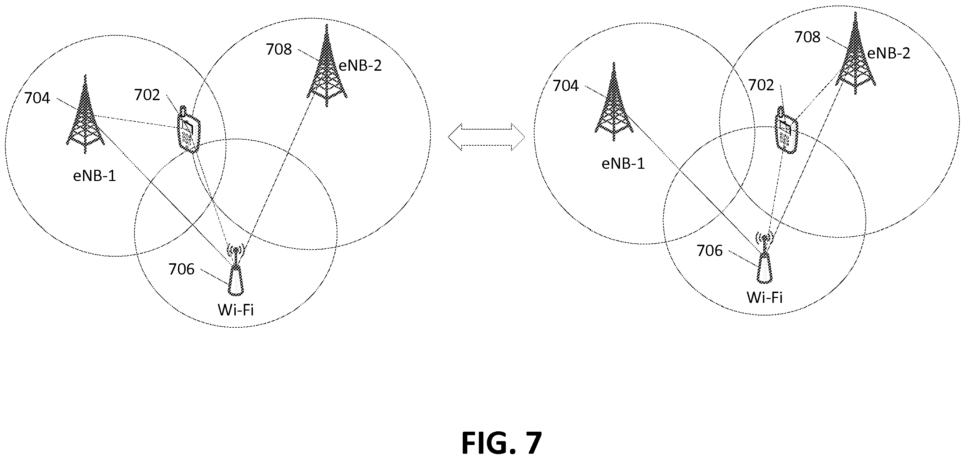

A 3GPP mobility event with connected Wi-Fi Offload may be provided. As illustrated in FIG. 7, a WTRU 702 may be connected to a first serving cell 704 of a 3GPP network and a Wi-Fi AP 706 for offload. The WTRU 702 may initiate a handover to the second serving cell 708 of the 3GPP network while maintaining the connection to the Wi-Fi AP 706, e.g., when the WTRU 702 moves into the coverage area of a second serving cell 708 of the 3GPP network. For example, it may be assumed that the second serving cell 708 may support offload to the Wi-Fi AP 706, e.g., in case of 3GPP RAN and Wi-Fi offload. It is also assumed that the second serving cell 708 may support offload to the Wi-Fi AP 706.

Combined 3GPP mobility event with Wi-Fi Offload mobility may be provided. As illustrated in FIG. 8, a WTRU 802 may be connected to a first serving cell 804 of a 3GPP network and to a first Wi-Fi AP 806 for offload. When the WTRU 802 moves into the coverage area of a second serving cell 808 of the 3GPP network, the WTRU may also move within the coverage area of a second Wi-Fi AP 810 that may be used for Wi-Fi offload for the current RRC connection. The WTRU may initiate a handover to the second serving cell 808 of the 3GPP network and, e.g., at the same time or within a period (e.g., a predetermined period) initiate a connection to the second Wi-Fi AP 810.

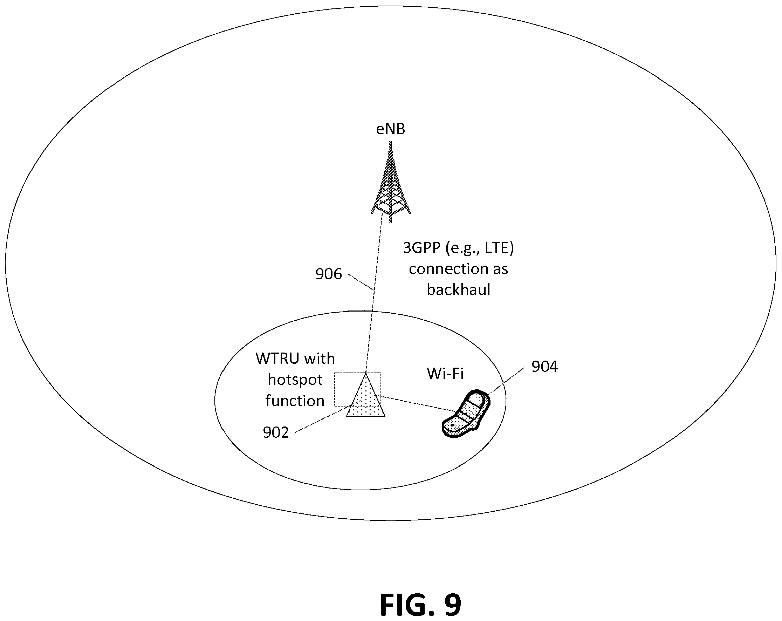

A Wi-Fi AP using 3GPP as backhaul link may be provided. As illustrated in FIG. 9, a WTRU 902 (e.g., a UMTS/LTE UE) may support Wi-Fi hotspot function. The WTRU 902 may act like Wi-Fi AP and may provide Wi-Fi connection(s) to other Wi-Fi-capable terminals. The WTRU 902 may relay data between Wi-Fi terminals (e.g., a Wi-Fi terminal 904) and internet, e.g., using UMTS and/or LTE connection as backhaul 906. One or more Wi-Fi APs may be installed, e.g., in moving vehicles like buses to provide Wi-Fi service to the passengers on board, e.g., using UMTS/LTE as backhaul.

Systems, methods and instrumentalities are provided to describe WTRU behavior that may be used for mobility control, e.g., when offloading data from the 3GPP network over a Wi-Fi connection. Systems, methods and instrumentalities are provided to describe network behavior of a 3GPP network and Wi-Fi APs. The network behavior may be a system behavior that may be independent from the methods, systems and/or instrumentalities applicable to a WTRU.

Wi-Fi discovery may be provided. A Wi-Fi AP may be used for offloading user plane data from a 3GPP network, e.g., if the Wi-Fi AP is discovered by a WTRU. Such Wi-Fi discovery may be power efficient, such that a WTRU may not be required to scan continuously for a usable Wi-Fi AP. The WTRU may be enabled to scan for a Wi-Fi AP when the WTRU is likely to find a Wi-Fi AP, when the Wi-Fi offloading may be useful or necessary, and/or when the WTRU is instructed by the network. Such network controlled discovery may prevent the WTRU from quickly and unnecessarily draining the battery. The battery draining may lead to a user to manually turn off the Wi-Fi radio interface. The network assisted information and/or network controlled discovery may be useful to make a Wi-Fi discovery power efficient and with lower latency than in an uncontrolled case.

Wi-Fi connection management may be provided. A Wi-Fi connection may be under the control of a 3GPP network, e.g., when the Wi-Fi may be used for data offloading from the 3GPP network. The Wi-Fi connection management may include setup, tear-down, and/or the change of the Wi-Fi connection, e.g., when the WTRU may move from one Wi-Fi coverage area to another. One or more systems, methods and/or instrumentalities of the 3GPP controlled Wi-Fi connection management may be provided.

A Wi-Fi connection setup may be slow and may include time consuming authentication or user interaction. The time consuming authentication may adversely affect the performance of the Wi-Fi offloading and may even cause interruption of the service, for example as a WTRU changes connection from one Wi-Fi AP to another. For these and other reasons, methods, systems and instrumentalities for speeding up of the Wi-Fi connection setup and/or handover process with a pre-authentication via a 3GPP network may be provided.

Mobility-related measurements may be provided. A WTRU may monitor the quality of the current Wi-Fi connection, and report measurements to the network, e.g., to facilitate the performance of Wi-Fi offloading. Wi-Fi measurement configurations and/or reporting may be provided.

Network signaling for one or more reference architectures may be provided. The data path split for Wi-Fi offloading may happen at different layers of the 3GPP system. The data may be offloaded from various core-network gateways (e.g., P-GW, S-GW, L-GW, etc.) as described herein for the 3GPP CN and Wi-Fi offload reference architecture. The data may be offloaded at the RAN (e.g., PDCP, RLC) or in MAC for the aggregation approach such as described herein for the 3GPP RAN and Wi-Fi offload reference architecture.

Based on the layer the Wi-Fi offloading may occur, different aspects may be considered. The coordination between the RAN and core-networks may be provided, for example, if the Wi-Fi offloading happens at the core-network gateways, and/or the mobility control is within the RAN nodes.

Avoidance of the Ping-Pong effect of Wi-Fi offloading may be provided. Service flows may be offloaded to WLAN for an interval of time and may switch back to 3GPP network. For example, during an inter-RAT packet switched (PS) handover or Circuit Switched Fallback (CSFB), the WTRU may decide that WLAN has higher priority than target RAT (e.g., GSM/EDGE Radio Access Network (GERAN)), e.g., based on Access Network Discovery and Selection Function (ANDSF) policies. The WTRU may start to offload one or more service flows to a WLAN. The WTRU may be switched back to LTE, e.g., after an interval of time. For example, an E-UTRA may have higher priority than WLAN, e.g., according to ANDSF policies, the service flows may be switched back to 3GPP. The Ping-Pong effect may cause unnecessary network signaling.

Wi-Fi node discovery may be provided. The scanning time of a WTRU may be minimized, e.g., to minimize battery consumption associated with measuring and scanning for Wi-Fi APs. Measurement procedures (e.g., optimized procedures), discovery, and/or connection to a Wi-Fi AP integrated/co-operating with a 3GPP (e.g. eUTRA or UTRA) network may be provided.

Discovery approaches and triggers to initiate discovery may be provided. A WTRU may determine (e.g., autonomously determine) when to trigger scanning for wireless access points. The WTRU may perform scanning continuously and/or periodically for a given period of time, e.g., when the WTRU triggers the Wi-Fi scanning. The continuous and/or periodic scanning may be configured by the network. A WTRU may trigger the Wi-Fi scanning to discover Wi-Fi APs according to one or more of the following criteria.

The Wi-Fi scanning may be triggered according to availability of network support for Wi-Fi offloading. A WTRU may determine that a 3GPP serving cell to which it is connected supports Wi-Fi offloading. For example, the WTRU may receive such information via a broadcasted system information and/or by dedicated RRC signaling.

The Wi-Fi scanning may be triggered according to a WTRU configuration for Wi-Fi scanning. A WTRU may be configured with one or more parameters to determine the Wi-Fi AP that may support Wi-Fi offloading, e.g., when performing the Wi-Fi scanning procedure. For example, the WTRU may receive the configuration, e.g., via a broadcasted system information, or using dedicated RRC signaling. As described herein, the parameters may be used as assistance information to the WTRU. The parameters may indicate to the WTRU that it may discover a Wi-Fi AP for offloading.

The Wi-Fi scanning may be triggered when an RRC connection may be established with a 3GPP network that may supportWiFi offloading or has integrated WiFi AP.

The Wi-Fi scanning may be triggered at a geographical location. For example, a WTRU may determine that it is within an area where 3GPP Wi-Fi offload or aggregation may be available according to information stored in an internal database. The database may include one or more of WTRU internal footprint (e.g., position and Wi-Fi AP), network-provided database and positioning information, or application-based position information. The WTRU may update internal footprint (e.g., autonomously updated) based on previous experiences (e.g., previous measurements above a certain threshold, scanning procedure(s), etc.).

The Wi-Fi scanning may be triggered by manual selection and/or the amount of data available. For example, a user may initiate or may terminate manual selection of Wi-Fi. A WTRU's internal uplink buffer levels may increase beyond a (e.g., configured) threshold.

The Wi-Fi scanning may be triggered by the amount of delay for data available for transmission. For example, the queuing delay (e.g., a maximum queuing delay) for data in the WTRU internal uplink buffer may increase beyond a threshold (e.g., a preconfigured threshold). The queuing delay may be one or more of the average waiting time for a packet that becomes available for transmission before it may be actually transmitted (e.g., over a transmission window), the delay experienced by the head of line packet in the buffer, or other similar measures. The packet may be a Packet Data Convergence Protocol (PDCP) Service Data Unit (SDU). The delay may be the time expired since the start of the PDCP SDU discard timer at the time of transmission of the corresponding PDCP Packet Data Unit (PDU). The delay may be an event such as a PDCP SDU discard, e.g., due to expiry of a corresponding SDU Discard Timer. For example, for packets corresponding to a data bearer that may be offloaded to a Wi-Fi interface.

The Wi-Fi scanning may be triggered by decrease in transmission rate and/or detection of congestion on the 3GPP air interface and/or detection of congestion on the 3GPP air interface. For example, a WTRU's transmission (e.g., uplink) rate may decrease below a threshold (e.g., configured threshold), such that more resources may be useful to maintain the QoS of the active services. A WTRU may determine whether a 3GPP interface is congested, e.g. from reception of an indication on a broadcast channel, or change in BLER, PER or queuing delay for user plane transmission.

The Wi-Fi scanning may be triggered by type of radio bearer configured and/or power usage and/or battery level. For example, a WTRU may be configured with at least one radio bearer for Wi-Fi offload. A WTRU may determine that its power condition is above a certain threshold, such that it may perform Wi-Fi scanning to discover an AP suitable for Wi-Fi offload.

A WTRU may receive control signaling indicating that the WTRU may start scanning for other RAT access points. For example, the network may determine that a WTRU may perform scanning for a Wi-Fi AP according to one or more of a WTRU reported position, WTRU mobility, WTRU proximity report, load experienced by a cell, a WTRU service request. For example, a network may detect that a WTRU is in the potential vicinity of a Wi-Fi AP. A WTRU may enter the coverage of a 3GPP serving cell (e.g., the network may be aware of the presence of an AP in the approximate coverage of the serving cell of the corresponding WTRU). The WTRU may report proximity to a previously visited AP in the area to the 3GPP network. The 3GPP network may determine that a WTRU connected to a given serving cell may initiate a Wi-Fi discovery for offload as a function of the experienced load in the concerned cell. A WTRU may have an amount of data (e.g., a large amount of data) and services requested or already active. The 3GPP network may determine that it may be useful to offload the WTRU and may therefore trigger measurements on the Wi-Fi RAT.

As described herein, a WTRU may store assistance information and/or may be explicitly provided with a set of assistance information, e.g., to optimize battery consumption in the WTRU. Assistance information for Wi-Fi discovery may be provided. A WTRU may receive assistance information from a network (e.g., a 3GPP-based network). The assistance information may be received on a broadcast channel (e.g., as part of the system information for the serving cell), or using dedicated signaling (e.g., in an RRC message such as an RRC connection establishment or an RRC connection reconfiguration with or without mobility information element (e.g., handover signaling)). For example, the network may provide assistance information to the WTRU using dedicated signaling when it determines that the WTRU may (or perhaps should) initiate the Wi-Fi scanning/search procedure.

The WTRU may use the received assistance information to determine the Wi-Fi AP the WTRU may use to connect. Using the assistance information, the WTRU may determine the channel or frequency to search for, and/or the information to use in its probe request, e.g., in case of active scanning. The assistance information may be stored in the WTRU. For example, the assistance information may be updated autonomously by the WTRU based on information from previously visited Wi-Fi nodes within the network.

The information provided to the WTRU may include one or more of a whitelist of Wi-Fi APs, a blacklist of Wi-Fi APs, a frequency band, a channel or frequency, a scan type, a probe delay, an access network type, a mesh ID, or a technology type (e.g., supported standards protocol), security information to use for authentication for a given allowed AP, additional access-related information, a measurement threshold, a scanning periodicity, opportunities to measure, or location information.

A whitelist of Wi-Fi APs may include one or more Wi-Fi APs that the WTRU may be allowed to access and to attempt a connection. For each of the one or more Wi-Fi APs, one or more parameters may be provided including, for example, SSID, BSSID, BSS Type, relative priority etc. A WTRU connected to a mobile communications network (e.g., a 3GPP network) may detect the APs in the whitelist and report them back to the mobile communications network.

A blacklist of Wi-Fi APs may include one or more Wi-Fi APs that the WTRU may not be allowed to access and/or measure and/or report. For each of one or more of the blacklisted Wi-Fi APs, one or more parameters may be provided including, e.g., SSID, BSSID, BSS Type, etc.

A frequency band may be a band of frequencies a WTRU may use to perform scanning. The WTRU may use a channel and/or a frequency to perform the scanning. A scanning may indicate the type of scan a WTRU may use to find a WLAN node. For example scanning may be passive and/or active. A probe delay may be a delay (e.g., maximum delay), a WTRU may expect a response of a probe request, e.g., if active scanning is used.

Additional access-related information may be provided to a WTRU regarding the access points such as allowed services, QoS, charging, etc. The additional access-related information may help the WTRU to determine whether it may be useful to connect to an access point.

Measurement threshold (e.g. an RSSI value) may be provided to a WTRU. The WTRU may report measurements (e.g., RSSI values) to a mobile communication network, e.g., when a measurement value of an AP in the list of allowed AP or any detected APs reaches above the measurement threshold.

Location information may be provided to a WTRU. For example, a WTRU may determine when to start scanning as a function of location information, which may be provided by the WTRU. For example, a WTRU may start scanning, when the WTRU may enter an indicated location area.

Assistance information may be provided to the WTRU over a shared broadcast channel. For example, the information may be received as a part of the broadcasted System Information, or using dedicated signaling such as part of an RRC measurement configuration (e.g., as described herein) or via an RRC message. The WTRU may receive the assistance information to initiate and/or configure Wi-Fi information. The assistance information list and/or indicate one or more of the information elements described herein. An RRC message may carry a Wi-Fi specific message or a request message. Upon reception of this RRC message carrying the container the WTRU may pass this information to the Wi-Fi protocol stack to process the message and act accordingly.

Upon reception of a RRC message containing information for another RAT, the WTRU may perform one or more of a power up or move out of a power saving more, initiate a scanning procedure, or store received information for later use. The WTRU may move out of a power saving mode, e.g., to initiate scanning. For example, the WTRU may initiate a scanning procedure according to a scanning type. The scanning type may be configured or indicated in the request or provided according to one or more of the parameters in the RRC message such as parameters described here.

An LTE WTRU may receive a container (e.g., a transparent container) and forward the information in the transparent container to a Wi-Fi entity, to an Station Management Entity(SME) or directly to the MAC layer of the Wi-Fi protocol. The information in the transparent container may correspond to a MLME-SCAN.request message. The SME may use the information in the message to create and generate a MLME-SCAN.request for the MAC. In response to this message, the WTRU may initiate the scan, e.g., according to the information provided in the message.

A report of discovered Wi-Fi nodes may be provided by a WTRU. The WTRU may perform a reporting for a channel indicated in a request or for one or more available channels; this may be done subsequent to the reception of a request or another event that initiated Wi-Fi discovery. The WTRU may compile a list of one or more detected BSSs and report the list back to the network using the 3GPP connection upon detection of at least one allowed basic service set (BSS) or AP. The report may include one or more of a list of BSSID, a list of SSID, a BSSType, a channel number where the BSS may be detected, an Infrastructure type, a security mode, or measurement information of the detected BSS (e.g., an RSSI value).

The WTRU may transmit the report in an RRC message. A detected BSS may be provided (e.g., explicitly provided) or indicated in an RRC message (e.g., as a part of a Wi-Fi measurement report as described herein). The RRC message that includes the report may carry a transparent container. The transparent container may be passed to the network entity that may understand Wi-Fi protocol. For example, in a network entity, the reception of such a report may start an authentication process such as described herein. For example, the transparent container may correspond to a structure similar to an MLME-SCAN.confirm message or to the actual primitive. The MAC entity of the Wi-Fi may compile the MLME-SCAN.confirm message and may append it to the RRC message to be transported to the network side for confirmation and pre-authentication.

The RRC measurement report may include Wi-Fi related measurement. The RRC measurement report may include one or more LTE measurements on the neighboring cells, frequencies, and/or RATs.

A WTRU may initiate reporting, e.g., when at least one of the allowed BSSs or APs are detected. A WTRU may trigger or include in the report an allowed BSS (e.g., an allowed BSS), e.g., to minimize the amount of reporting to the network. The allowable BSS may correspond to at least one BSS configured by the network as allowable (e.g., in a RRC message (e.g., upon initial configuration), via an NAS message, and/or preconfigured in the WTRU SIM).

A WTRU may report the detected and/or allowed BSS(s) when the signal quality or channel quality is above a threshold. Such a threshold may be configured by the network. The WTRU may be configured by the 3GPP network to report (e.g., periodically report) the detected allowed BSS(s). The WTRU may be configured by the network with event triggered measurement reporting. The configuration may include the BSS for which an event can be triggered, the quality of the cells, e.g., when the report may (or perhaps should) be triggered. A set of measurements for Wi-Fi specific events may be introduced. The events may be triggered according to one or more conditions, including, e.g., detection of an allowed BSS (e.g., detection of an allowed BSS with a channel quality that is above a threshold), a BSS that is no longer within the desired channel quality or no longer detectable, a channel quality or an effective data rate of a serving BSS that is below a configured threshold, or detect a BSS with a better channel quality (e.g., by a configured offset) than the serving BSS.

A WTRU may attempt (e.g., autonomously attempt) to connect and authenticate with the discovered BSS. The BSS may be in a list of allowed BSSs or the WTRU may have received a positive probe response for the BSS. The WTRU may send a report to the 3GPP network indicating the BSS to which the WTRU is attempting to authenticate or the BSS the WTRU may have connected to. The report may indicate similar elements as to the report as described herein. The 3GPP network may use such report to determine where to route the data for traffic offloading or aggregation.

A WTRU may report Wi-Fi information. For WTRUs that may support Wi-Fi AP functions and may provide Wi-Fi connection, e.g., to other WTRUs or Wi-Fi terminals, the WTRUs may report this capability and related Wi-Fi information to the eNB, e.g., when the WTRU establishes LTE connections with an eNB. The Wi-Fi information that may be reported to the eNB by the WTRU may include one or more of: a WTRU's capability of supporting Wi-Fi AP function, the on/off status of the WTRU's Wi-Fi AP function, or the settings of the WTRU's Wi-Fi AP. The settings of the WTRU's Wi-Fi AP may include, for example, one or more of the following: the SSID, BSSID, and/or BSS type of the WTRU's Wi-Fi AP, the bands and channels that the WTRU's AP may support, the security mode, the Access Network Type (e.g., personal, public, emergency, etc.), the venue information (e.g., home, bus, train, etc.), the load status, if the Wi-Fi AP function is on, other information, etc. The information may be reported from the WTRU to the eNB, e.g., during the RRC connection setup in the messages including, for example, an RRC Connection Request message, an RRC Connection Setup Complete message, an RRC Connection Reconfiguration Complete message, etc. The information may be reported during the lifetime of a RRC connection in one or more RRC messages, such as measurement report. Other RRC messages may be used for this purpose. For dynamic information such as the load status of the AP, the WTRU may report (e.g., periodically report) such information.

The report (e.g., including the Wi-Fi information) may be sent in association with a handover procedure, e.g., where the WTRU may report the information to the target eNB when it tries to establish the RRC connection with the target eNB. The report may be sent, e.g., in a RRC re-establishment where the WTRU may report the information to the eNB, e.g., in a RRC re-establishment message. The eNB may add the AP information (e.g., new AP information) in the discovery assistance information provided to WTRUs, e.g., when the network receives the Wi-Fi information report from the WTRUs. The discovery assistance information may be provided, e.g., via broadcast and/or dedicated signaling.

Wi-Fi connection management may be provided. Wi-Fi Pre-authentication through a 3GPP Network may be provided. In Wi-Fi systems that support authentication methods including, for example, WPA, WPA2.0 or HotSpot2.0, authentication methods including, e.g., 802.1X and/or EAP may be provided. 802.1x/EAP may involve a number of authentication frames exchanged between the Supplicant (e.g., the WTRU) and the Authenticator (e.g., the Wi-Fi AP). The 802.1x/EAP may involve a RADIUS server and/or an HSS for authentication. The 802.1x/EAP authentication may be time-consuming and may introduce a delay before a WTRU may start transmitting and/or receiving data. The 802.1x/EAP authentication may cause service interruption when the WTRU tries to re-associate with a new Wi-Fi AP.

If a WTRU is connected with a 3GPP network when trying to access a Wi-Fi AP, the WTRU may complete the 802.1x/EAP authentication with the target AP and may have the master keys ready before the WTRU may associate with the target Wi-Fi AP. The 3GPP network connection may be used to provide a channel for the WTRU and target AP to exchange 802.1x/EAP frames. The 3GPP network may be transparent to the 802.1x/EAP authentication. It may be assumed that a 3GPP network may have a secure connection with the target AP, the AP may be integrated with the 3GPP RAN node, and/or there may be a secure IP connection (e.g. an IPSec tunnel) between the AP and the 3GPP network. The target Wi-Fi AP may be able to handle 802.1x/EAP frames in IP packets. The WTRU may transmit and/or receive the 802.1x/EAP frames, e.g., using the control plane (e.g., RRC, or NAS) and/or the user plane. For example, the 3GPP network may receive the 802.1x/EAP frames from the WTRU. The 3GPP may forward the 802.1x/EAP frames to the target AP, e.g., using a secure IP connection, or vice versa, where the same principles may be applied to transmit 802.1x/EAP frames to the WTRU. The pre-authentication through 3GPP network may be applied, e.g., when a WTRU may be associated with a Wi-Fi AP or the WTRU may not be connected with any Wi-Fi AP.

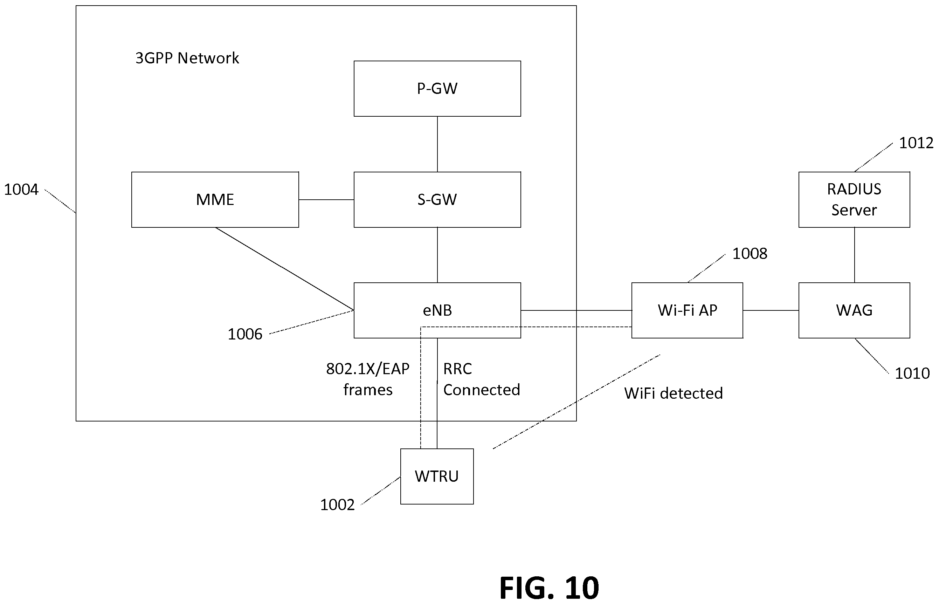

FIG. 10 illustrates an example of Wi-Fi pre-authentication through a 3GPP network. Systems, methods, and instrumentalities may be provided to describe one or more ways for the 3GPP network to provide a channel between a WTRU 1002 and the target Wi-Fi AP 1008 for carrying 802.1x/EAP frames. The one or more ways may be based on how the target AP may be connected to the 3GPP network and/or which 3GPP entities may have the connection to target AP. For example, user plane methods and/or control plane methods may be provided.

An existing PDN connection may be reused in the user plane. As illustrated in FIG. 10, a WTRU may use the existing PDN connections (e.g., PDP context, EPS bearer, etc.) to transmit the 802.1x/EAP frames in IP packets. For example, the target AP may be connected to the 3GPP network via Local Gateway(L-GW) and the WTRU may have established bearers to the L-GW. The WTRU may send 802.1x/EAP packets on the bearers and L-GW may route them to the target AP. The network may provide the WTRU the IP address of the target AP.

A dedicated PDN connection may be set up in the user plane. A WTRU may initiate the establishment of a PDN connection (e.g., PDP context, EPS bearer, etc.) dedicated for pre-authentication purposes. For example, an APN (e.g., a special APN) may be provided in the service request to the network so the network may differentiate the connection from others, and map it to the connection with the target AP. The WTRU may encapsulate the 802.1x/EAP frames in IP packets or the WTRU may transmit the raw frames directly on the special PDN connection.

A dedicated radio bearer, e.g., a special DRB, may be used in the user plane. For example, a DRB with no corresponding PDP context or EPS bearer may be created to carry 802.1X/EAP frames, e.g., if the target AP is integrated in the 3GPP RAN or it has direct connection to the RAN. The 3GPP RAN may use QoS policy (e.g., a local QoS policy) for configuring the DRB.

Direct path control plane signaling (e.g., NAS and/or RRC) may be provided. The 802.1x/EAP frames may be carried in NAS and/or RRC messages between the WTRU and the 3GPP network entity (e.g., one of eNB/NodeB, MME and/or SGSN). Proxy-based control plane signaling may be provided. An entity (e.g., a logical function entity), e.g., 802.1x/EAP proxy may be used to retrieve the 802.1x/EAP information from the NAS or RRC message. The proxy may encapsulate the 802.1x/EAP information in IP packets and may forward them to the target Wi-Fi AP, or vice versa. The 802.1x/EAP proxy may be implemented as a separate node, e.g., accessible by a standardized and/or a proprietary interface, or as part of an existing standardized node. Dedicated radio bearer e.g. a Signaling Radio Bearer (SRB) may be provided. A dedicated SRB may be used to carry 802.1X/EAP frames, e.g., if the target AP is integrated in the 3GPP RAN or has direct connection to the RAN.

Pre-authentication using 3GPP procedures may be provided. The pre-authentication may be initiated by a WTRU or by a network (NW). The WTRU may initiate pre-authentication in one or more of the following ways. The WTRU may initiate (e.g., autonomously initiate) the pre-authentication. A WTRU may initiate pre-authentication if one or more target AP(s) have advertised support for pre-authentication. The WTRU may initiate pre-authentication if the 3GPP network indicates support for Wi-Fi pre-authentication. The WTRU may receive an error message or parameters for an alternative authentication, e.g., if the 3GPP network does not indicate a support. The WTRU may initiate pre-authentication with target APs that may use 802.1x/EAP authentication.

As illustrated in FIG. 10, a WTRU 1002 may initiate pre-authentication by sending a Wi-Fi Pre-authentication Request message to the 3GPP network 1004 or similar. The request message may be an NAS or an RRC message, or an Information Element (IE) in an NAS or an RRC message. The pre-authentication request may include identification (e.g., a BSSID) of a target Wi-Fi AP 1008 and/or an identification of a current connected Wi-Fi AP.

A 3GPP network may determine whether the pre-authentication request is supported for a given target AP, e.g., when the 3GPP network receives a Wi-Fi pre-authentication request from the WTRU. For example, the network 1004 may determine whether the target Wi-Fi node is known and/or is accessible, whether or not the network can setup an interface and/or a connection to the target Wi-Fi node, and/or whether or not the network has a connection to the target Wi-Fi node. The network may initiate setup of an interface and/or connection to the target Wi-Fi node, e.g., if the target Wi-Fi is known but there is no connection established. The network 1004 may confirm or reject the request by sending a NAS and/or RRC confirmation/reject message to the WTRU 1002. The WTRU 1002 may receive an NAS or an RRC confirmation and/or a reject message. The confirmation message may provide the IP address of the target Wi-Fi AP 1008. The reject message may indicate the cause of rejection.

NW initiated pre-authentication may be provided. A WTRU may receive an NAS or an RRC Wi-Fi Pre-authentication Command message or similar from a NW, for example, if the WTRU indicates support for pre-authentication as part of its WTRU capabilities. The WTRU may provide the indication, for example, associated with establishing an RRC connection with a 3GPP network or following a request for Wi-Fi-related capabilities received by the network. For example, the NW may initiate the pre-authentication by sending an NAS or RRC Wi-Fi Pre-authentication Command message or similar to the WTRU. The NW may initiate pre-authentication with target Wi-Fi APs (e.g., Wi-Fi AP) that support pre-authentication. The WTRU may transmit to the NW a list of AP(s) that support pre-authentication (e.g., as part of a measurement report). The NW may acquire such information through operation and maintenance (O&M). The NW may initiate pre-authentication for a WTRU that supports pre-authentication, e.g., as indicated in the WTRU's capabilities information. The pre-authentication command may provide one or more of the identification (e.g., a BSSID) of the target Wi-Fi AP or the IP address of the target Wi-Fi AP.

The WTRU may receive a response from the NW, which may confirm the WTRU-initiated pre-authentication. The WTRU may send a confirmation to the NW, e.g., when the WTRU receives the NW-initiated authentication command. The WTRU may start exchanging 802.1x/EAP frames with the target Wi-Fi AP over an existing user plane connection or using control plane signaling path and/or the WTRU and the NW may start establishing the user plane connection, e.g., if pre-authentication may be carried on the user plane and exchanging 802.1x/EAP frames over the established connection.

The WTRU may report the result of 802.1x/EAP to the NW, e.g., by sending an NAS or an RRC Wi-Fi pre-authentication report message or similar. The report message may include one or more of a pre-authentication result (e.g., success or failure), a cause of failure, or identification (e.g., a BSSID) of the target Wi-Fi AP. The network may use the pre-authentication result to control and/or manage Wi-Fi connection establishment with one or more AP(s). A Wi-Fi AP for which authentication may have failed may not be considered as a target AP for Wi-Fi connection establishment.

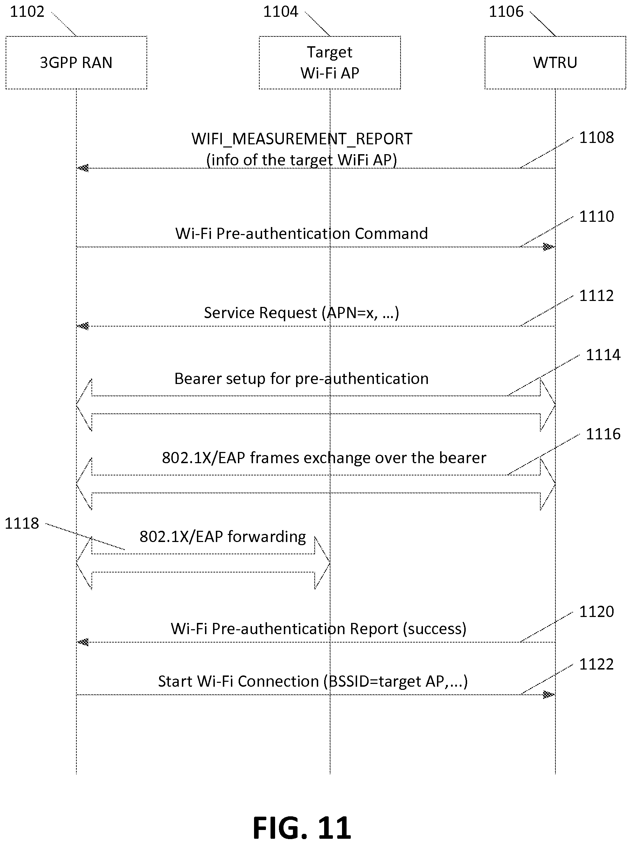

FIG. 11 illustrates an example of Wi-Fi pre-authentication via a 3GPP network. As illustrated in FIG. 11, a WTRU 1106 may detect a Wi-Fi AP (e.g., a new Wi-Fi AP) 1104. At 1108, the WTRU 1106 may send a Wi-Fi measurement report to the 3GPP network 1102. The measurement report may include the identity of one or more detected Wi-Fi APs. The 3GPP network 1102 may verify that the WTRU 1106 may use a detected Wi-Fi AP for data offloading and may command the WTRU 1106 to associate with the Wi-Fi AP 1104. At 1110, the 3GPP network 1102 may trigger the WTRU 1106 to perform pre-authentication with this Wi-Fi AP 1104 by sending a command message to the WTRU 1106.

At 1112, the WTRU 1106 may initiate a bearer setup by sending a service request message. An Access Point Name (APN) may be used to set up the right bearer. At 1114, a 3GPP bearer may be setup. At 1116, the WTRU 1106 and the 3GPP network 1102 may use the bearer to carry 802.1x/EAP frames. The WTRU 1106 and the 3GPP network 1102 may exchange the 802.1x/EAP frames. At 1118, the 3GPP network 1102 may forward the EAP frames between the WTRU and the target Wi-Fi AP 1104. At 1120, the WTRU 1102 may send a confirmation report to the 3GPP network, e.g., if the Wi-Fi pre-authentication is successfully completed and the primary keys are installed in the WTRU 1106. At 1122, the 3GPP network 1102 may indicate to the WTRU 1106 to associate with the AP. The WTRU 1106 may skip the 802.1 X/EAP authentications and continue from the 4-way handshake after the association.

A 3GPP network assisted Wi-Fi connection may be provided. A WTRU may receive a list of preferred candidate Wi-Fi APs from the 3GPP network. The WTRU may select a target AP from the preferred list. The network provided candidate AP information may include one or more of the identification of the candidate AP(s) (e.g., an SSID, an BSSID, etc.), the channel number of the candidate AP(s), or the priority of the candidate APs (e.g., if more than one APs are listed). The network provided candidate AP information may further include one or more of association control parameters (e.g., the timers for waiting probe response), the security information of the candidate AP(s), the billing information of the candidate AP(s), or pre-authentication configuration information for the candidate AP(s).

The WTRU may select a Wi-Fi AP based on one or more criteria including, for example, the Wi-Fi AP signal strength, the Wi-Fi AP signal priority, the Wi-Fi AP connected previously, capabilities of the Wi-Fi AP. The WTRU may select the Wi-Fi AP with the strongest signal strength. The WTRU may select the Wi-Fi AP with highest priority. The WTRU may select a Wi-Fi AP that the WTRU may have been connected with before. The capabilities of the Wi-Fi AP may include, e.g. supported transmission rates, supported features, e.g., specification releases, or the like. The WTRU may also receive from the NW a blacklist of APs that the WTRU may not be allowed to access.

The WTRU may receive the candidate AP list either on a broadcast channel (e.g., as part of the system information for the serving cell), or the candidate AP list may be received using dedicated signaling (e.g., in an RRC message or in an NAS message).

The WTRU (or the NW) may initiate the pre-authentication towards a target Wi-Fi AP before the WTRU may start to associate with the concerned Wi-Fi AP, e.g. as described herein.

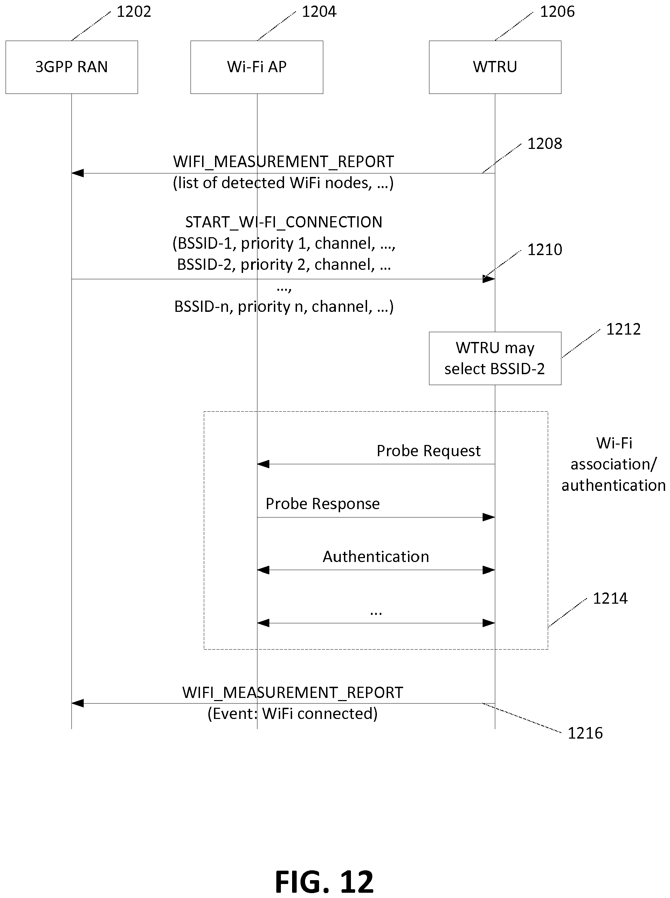

3GPP network controlled Wi-Fi connection may be provided. FIG. 12 illustrates an example of 3GPP network controlled Wi-Fi connection. As illustrated in FIG. 12, a WTRU 1206 may be connected to a mobile communications network (e.g., a 3GPP network) 1202. The WTRU 1206 may receive control signaling from the 3GPP network 1202. The control signaling may include a command to establish a Wi-Fi association. The WTRU may not be allowed to connect to a Wi-Fi AP autonomously. The WTRU may receive an indication from the 3GPP network that a mode (e.g., a mode of 3GPP controlled Wi-Fi connection mode) is preferred. The indication of preferred mode may be provided as part of system information and/or dedicated NAS and/or RRC messaging. In other cases, a WTRU's autonomous connection to a Wi-Fi AP may be allowed.

As illustrated in FIG. 12, at 1208, the WTRU 1206 may send a Wi-Fi measurement report. The Wi-Fi measurement report may include a list of detected Wi-Fi nodes. At 1210, the WTRU 1206 may receive a command (e.g., a start_Wi-Fi_connection command) from the 3GPP network 1202 to connect to a Wi-Fi AP 1204. If the WTRU 1206 is connected to a different Wi-Fi AP, the command may trigger a change of Wi-Fi connection (e.g., a Wi-Fi handover).

The start_WiFi_connection command from the 3GPP network 1202 may include identification of the one or more candidate AP(s) (e.g., SSID(s) and/or BSSID(s)), the channel number of the candidate AP(s), one or more control parameter(s) for the association (e.g., timers such as for probe response wait time), etc.), the security information of the candidate AP(s), and/or a delay timer for the Wi-Fi connection procedure. The WTRU may use the delay timer to delay the Wi-Fi connection.

At 1212, the WTRU 1206 may select one of the candidate APs received as a part of the start_Wi-Fi_connection command for association. The WTRU may have received a configuration or a request to initiate a pre-authentication towards the target AP (e.g., as described herein), e.g., before receiving the command to start the Wi-Fi connection from the 3GPP network. If not performed already, the WTRU may initiate the pre-authentication with the target AP as described herein, e.g., when the WTRU receives the command to start a Wi-Fi connection. The network may trigger the establishment of a Wi-Fi connection according to at least one of the Wi-Fi measurement report, the 3GPP network condition, the WTRU condition, or the WTRU mobility. The 3GPP may receive a Wi-Fi measurement report from the WTRU. For example, the WTRU may detect and report a suitable or a better Wi-Fi candidate AP. The 3GPP network may consider the 3GPP network condition, e.g., whether a cell in the network or the network is congested and/or loaded or is increasingly becoming congested and/or loaded, while some of the data in the cell could be offloaded through the Wi-Fi network. The 3GPP network may consider the WTRU condition, e.g. whether the WTRU may have initiated a service that may be offloaded to a Wi-Fi connection. The 3GPP network may consider the WTRU mobility state, e.g., the 3GPP network may determine that the WTRU mobility is below a given threshold, e.g., such that management of a Wi-Fi connection for a given WTRU may not significantly increase control signaling load.

At 1214, the WTRU 1206 may perform association and/or authentication with the Wi-Fi AP 1204. At 1216, the WTRU may send another Wi-Fi measurement report to the 3GPP network. The Wi-Fi measurement report (at 1216) may include the identity of the AP selected by the WTRU 1206 and/or an indication whether the connection to the selected AP was successful or unsuccessful.

The WTRU may receive a disconnection command from the 3GPP network to disconnect from a Wi-Fi AP. For example, the disconnection command may be triggered by one or more of a Wi-Fi measurement report, a user plane throughput measurement, a 3GPP mobility event, a 3GPP network decision that no Wi-Fi offloading may be needed, or a 3GPP network decision to move the WTRU to RRC IDLE mode.

The WTRU may receive a disconnection command from the 3GPP network, e.g., if the Wi-Fi connection quality is below a threshold. The disconnection command may be triggered by user plane throughput measurement such as measured packet error rate and/or packet latency may exceed a given threshold, for example, if the QoS requirements of the offloaded services may no longer be met by the Wi-Fi connection. The disconnection command may be triggered by a 3GPP mobility event including, e.g., when the network receives a 3GPP measurement report and is about to handover the WTRU to another cell.

Wi-Fi connection and/or disconnection reporting may be provided. A WTRU may report to the 3GPP network, e.g., after it successfully connects to and/or disconnects from a Wi-Fi AP. Whether or not a WTRU transmits such a report may be a configured aspect of the WTRU' s configuration. The WTRU may perform such reporting independent of the connection or disconnection method, e.g., independent of whether the WTRU has connected to or disconnected from a Wi-Fi AP autonomously, by user manual control, and/or by 3GPP network control.

A WTRU may report the connection failure to the 3GPP network. The WTRU in the connection failure report may include the cause of the failure. A connection and/or disconnection report, or failure report may be sent according to one or more of the NAS and/or RRC messages dedicated for connection/disconnection report, part of existing NAS and/or RRC message, e.g. RRC_CONNECTION_SETUP_COMPLETE, RRC_CONNECTION RECONFIGURATION_COMPLETE, etc., or in the form of an event triggered Wi-Fi measurement report.

The connection and/or disconnection report may include at least one of the identification of the (e.g., most recently) connected Wi-Fi AP, or the Wi-Fi measurement results of the Wi-Fi connection. A failure report may include at least one of the identification of the Wi-Fi AP that the WTRU fails to connect to, the cause of the failure, the WTRU's location, e.g. when the WTRU initiated the connection or when it determined the failure condition or the measured signal strength for the corresponding Wi-Fi AP.

A WTRU may suspend its data bearers associated to the Wi-Fi offload, e.g., if the WTRU fails to connect for Wi-Fi offload during a Wi-Fi mobility procedure, or if the WTRU disconnects from a Wi-Fi AP e.g., because the WTRU loses the connection (e.g., the WTRU may move out of the Wi-Fi coverage). The data bearers may remain suspended for a period or until the WTRU receives control signaling that may reconfigure the bearers for transmission over a 3GPP interface or until the WTRU successfully re-associates with a Wi-Fi AP for Wi-Fi offload. At re-association, the WTRU may re-establish the concerned bearers.

The WTRU may perform the re-establishment such that cumulative retransmissions may be performed when the concerned radio bearers are restarted. The WTRU may perform re-establishment of a subset of bearers that was configured for transmission over the Wi-Fi offload interface. Data in the WTRU buffers may be available for transmission starting from the first unacknowledged packet (e.g., from the first PDCP SDU for which the corresponding RLC PDUs may have not been acknowledged before the bearer(s) were suspended). The 3GPP PDCP status report and corresponding request may be used to implement selective retransmissions.

A WTRU may implement a timer. The WTRU may remove the bearer configuration for the suspended bearers, e.g., at expiry of the timer. The WTRU may flush any associated uplink and downlink buffer and release any related PDCP, RLC and/or MAC entity, e.g., when the WTRU removes the bearers.

3GPP network controlled Wi-Fi handover (e.g., re-association) may be provided. When a WTRU is connected to a 3GPP network and a Wi-Fi AP, the WTRU may re-associate to a different Wi-Fi AP, autonomously or by manual control from the user. The WTRU may receive control signaling from the 3GPP network that may control the Wi-Fi re-association. For example, the 3GPP network controlled Wi-Fi handover may be triggered by one or more of the reception of a Wi-Fi measurement report from the WTRU, the load status of a Wi-Fi AP, or as a result of a service requested (e.g., by NAS) that may not be supported by the current Wi-Fi AP.

The Wi-Fi measurement report may indicate at least one of a signal strength of a neighboring Wi-Fi AP or that the signal strength of a neighboring Wi-Fi AP may be better than current Wi-Fi connection (e.g., by a configured offset value). The signal strength of the neighboring Wi-Fi AP may be above a threshold (e.g., by a configured offset value) and the current Wi-Fi connection may be below a threshold (e.g., by a configured offset value). The load status of the Wi-Fi AP may exceed a given threshold. The network may offload to another detected Wi-Fi AP that may support the requested service with the other active services provided by the current Wi-Fi connection, e.g., if a service requested (e.g., by NAS) may not be supported by the current Wi-Fi connection,

The WTRU may receive a command from the 3GPP network that may initiate the re-association to a different Wi-Fi AP. The command may be similar to the start-Wi-Fi-connection command as described herein with a different Wi-Fi AP as the target. The command may be a separate change-Wi-Fi-connection command. The change-Wi-Fi-connection command may include similar information to start-Wi-Fi-connection command as described herein. The WTRU (and/or the network) may initiate pre-authentication with the target AP (e.g., new target AP) before or after the command may be sent and/or received. The WTRU may report to the 3GPP network after the WTRU successfully re-associates with the target AP, or if it failed to complete the association, for example, similar to 3GPP NW controlled Wi-Fi connection.

3GPP network controlled Wi-Fi on/off may be provided. The WTRUs that may support one or more Wi-Fi AP functions may be host to one or more WTRUs or Wi-Fi terminals. The host Wi-Fi AP may provide Wi-Fi connection, e.g., to the WTRUs or Wi-Fi terminals. A 3GPP network may control the on and off function of the AP in the host WTRU. This function may be helpful in places such as metro, factories, hospitals, where the unexpected Wi-Fi signals may be prohibited in order to avoid the interference with the critical Wi-Fi systems of the metro, hospitals. The eNB may broadcast an indication in a system information message that the WTRU's Wi-Fi AP function may be turned on and/or off. The eNB may send such indication/order to the WTRUs that may support the Wi-Fi AP function, to turn it on and/or off.

Wi-Fi Measurement may be provided. A 3GPP network may use the Wi-Fi measurement information for control of a WTRU's Wi-Fi connection, including commanding the WTRU to connect to a Wi-Fi AP, disconnect from an AP, and/or switch to an AP (e.g., a new AP), e.g., when the WTRU is connected to the 3GPP network. The measurement of Wi-Fi may be considered as a new (e.g., previously unused) inter-RAT measurement type. The Wi-Fi measurement may be configured similar to other inter-RAT measurement configuration defined in 3GPP.

One or more Wi-Fi measurement configurations may be provided. One or more measurement configurations may be defined for Wi-Fi including, e.g., Measurement ID, Measurement Object, Reporting criterion, Event triggered, Reporting Quantity, or Other configuration. A measurement ID may be used to identify the measurement object(s) and related reporting configuration. The measurement ID may be used in a measurement report to reference the corresponding measurement result(s). A measurement object may be an object on which a WTRU may perform Wi-Fi measurements. The measurement object may include one or more of a Wi-Fi frequency, a list of Wi-Fi channels, or a list of Wi-Fi APs. A reporting criterion may provide a criterion for a WTRU to trigger a measurement report. The reporting criterion may trigger the report periodically or based on an event. In case of periodical trigger, a WTRU may periodically report the Wi-Fi measurement results to a 3GPP network, for example. A periodical timer may be dedicated for a Wi-Fi measurement. The periodical timer may be configured by a 3GPP network.

A Wi-Fi measurement report may be triggered by one or more of the events including, for example, successful connection with a Wi-Fi AP, the loss of connection with a Wi-Fi AP, the signal strength of a neighboring Wi-Fi AP, which may be better than that of a connected Wi-Fi AP (e.g., by a configured offset value), the signal strength of a connected Wi-Fi AP, which may be above/below a threshold (e.g., by a configured offset value), the signal strength of a detected Wi-Fi AP, which may be above a threshold (e.g., by a configured offset value), or the pre-authentication failure with a Wi-Fi AP. For each of the trigger events, related parameters, e.g., the threshold values, time-to-trigger values, etc. may be configured by the network and/or determined by the WTRU. One or more of the parameters including, for example, Received signal strength indicator (RSSI), Block error rate (BLER), etc. may be configured as the quantity to report. Other configuration may include, for example maximum number of Wi-Fi APs that can be included in a measurement report.

A WTRU may receive a Wi-Fi measurement configuration from the 3GPP network as a part of a 3GPP measurement configuration message. The Wi-Fi measurement configuration may be signaled as a Wi-Fi measurement control message (e.g., a separate control message). The Wi-Fi measurement configuration may be applied to a WTRU that may have no existing Wi-Fi connection or to a WTRU that may have an established Wi-Fi connection.

Wi-Fi measurement reporting may be provided. A WTRU may send a Wi-Fi measurement report when the periodical timer expires, e.g., if the WTRU is configured with periodic reporting. A WTRU may send a Wi-Fi measurement report one or more times or each time a configured event may be triggered, e.g., if the WTRU is configured with an event triggered reporting. A prohibit time may be configured to limit the amount of reporting from the WTRU.

The Wi-Fi measurement report may include one or more parameters, such as a Measurement ID, Measurement results of the current Wi-Fi connection, Measurement results of the neighboring Wi-Fi APs, and/or Measurement results of other neighboring Wi-Fi APs. The Measurement ID may be provided in the measurement configuration for the Wi-Fi measurements. Measurement results of the current Wi-Fi connection may be provided, e.g., if the WTRU is connected to a Wi-Fi AP. The measurement results of the current connection may be included (e.g., connected Wi-Fi nodes). Measurement results of the other neighboring Wi-Fi APs may be provided, e.g., as listed in the measurement configuration message (e.g., listed Wi-Fi APs). Measurement results of the other detected Wi-Fi APs that may not be listed in the measurement configuration message may be provided (e.g., other detected Wi-Fi APs). The measurement results may include one or more of Received signal strength indicator (RSSI), or Block error rate (BLER).

The WTRU may be configured by the network with a number (e.g., a maximum number) of measurement results. The WTRU may select the results to include in the report according to a priority (e.g., the priority of the connected Wi-Fi APs may be greater than the priority of the listed Wi-Fi APs, which may be greater than the priority of the detected Wi-Fi APs).

The WTRU may select the results according to the signal strength and/or the BLER (e.g., the results of stronger RSSI and/or lower BLER may be selected), e.g., if the number of reportable listed Wi-Fi APs or detected Wi-Fi APs exceed an allowed number of measurement results.

The WTRU may send the Wi-Fi measurement report to the 3GPP network, e.g., via an RRC message. The RRC message may be sent as a part of a 3GPP measurement report. The WTRU may send the Wi-Fi measurement report to the 3GPP network via a user plane data carried over Wi-Fi interface, e.g., when the WTRU is connected to the Wi-Fi, such as to reduce the signaling overhead over the 3GPP air interface, or at other times. Control signaling for the Wi-Fi connection may be carried in a 3GPP RLC PDU and/or in a 3GPP PDCP control PDU, e.g., dedicated for control signaling.

A 3GPP network (NW) may perform one or more actions upon receiving a Wi-Fi measurement report. The one or more actions may include initiating the pre-authentication procedure, commanding the WTRU to connect and/or disconnect from a Wi-Fi AP, starting data offloading, e.g., if a successful Wi-Fi connection is reported, stopping data offloading, e.g., if the loss of Wi-Fi connection is reported, etc. The actions may further include, stopping or restarting data offloading, e.g., if the signal strength is below/above a threshold value, commanding the WTRU to connect to a Wi-Fi AP of higher priority with a stronger measured signal strength, etc.

Interaction of Wi-Fi offloading with 3GPP mobility may be provided. A WTRU may report an indication of an AP's Wi-Fi offloading capability, e.g. with a list of one or more detected cell(s). The WTRU may report an indication of its capabilities for Wi-Fi offloading (e.g., if not already signaled as part of the WTRU capability exchange during the connection establishment procedure). The report of an indication of an AP may be useful for the 3GPP network to determine the suitable target NB and/or eNB.

The source eNB may signal information related to a WTRU's current Wi-Fi connection to the target eNB, e.g., as a part of a handover preparation. The signaling of information may enable the target eNB to maintain the Wi-Fi connection for the concerned WTRU. The target eNB may set up a connection with the Wi-Fi node as part of the handover preparation (e.g. a handover of the X2-WIFI interface with the concerned AP from the source eNB to the target eNB). The WTRU may confirm the Wi-Fi connection in the handover complete message.

The target eNB may reconfigure (and may trigger the re-establishment of) any radio bearers associated to the Wi-Fi offload connection in a handover command, e.g., if a selected target eNB does not support Wi-Fi offload (e.g. does not support the X2-WIFI interface), or if the setup of the X2-WIFI interface with the concerned AP fails.

The target eNB may indicate a list of Wi-Fi information to the WTRU in the handover command, e.g., as part of the handover (HO) preparation. The WTRU may use this information to start searching for indicated Wi-Fi in targeted area after reception of the handover command, and/or the Wi-Fi connection may be ready before HO complete. In some instances, for example, the HO may be a faster. If the Wi-Fi connection is ready before HO, the handover complete message may be include in the connected Wi-Fi info.

The source eNB may indicate what radio bearer (RAB(s)) is configured for Wi-Fi offload, e.g., as part of the WTRU context information transfer between source eNB and target eNB. For example, a transparent container may be used.

Interaction with one or more 3GPP RLF may be provided. The WTRU may maintain the Wi-Fi connection, e.g., when the WTRU detects a radio link failure on the 3GPP air interface. The services carried over the Wi-Fi path may continue. eNBs of neighbor cells may receive information on the WTRU's Wi-Fi connection as well as the corresponding radio bearer configuration for the Wi-Fi offload, e.g., as part of the network preparation.

A WTRU may include information related to the established Wi-Fi connection in the RRC re-establishment message, e.g., if the WTRU attempts to re-establish RRC connection with the 3GPP network. Such connected Wi-Fi information may include one or more of the identification of the currently connected Wi-Fi AP, the bearer identification of the service(s) currently carried over the Wi-Fi connection, and/or a Wi-Fi measurement report (e.g., to allow for Wi-Fi re-association in the 3GPP serving cell).

The WTRU may maintain the Wi-Fi connection after detecting a radio link failure for the serving cell of the 3GPP air interface while performing the connection re-establishment e.g., while RRC timer T311 is running. The WTRU may release the Wi-Fi offload connection, e.g., if the RRC connection re-establishment fails (e.g. when T311 expires) and/or if the WTRU enters the RRC idle mode.

The WTRU may release the Wi-Fi connection after detection of a radio link failure for the serving cell of the 3GPP air interface, e.g., if the cell selected for the re-establishment does not support Wi-Fi offload.

Prevention of the Ping-Pong effect may be provided. A RAN may indicate an Offload Delay Timer value to a WTRU. The WTRU may start the Offload Delay Timer and may start Wi-Fi offloading after the timer expires, e.g., when the Wi-Fi offloading criteria is satisfied, e.g., according to the ADNSF policies or an explicit Wi-Fi connection command is received.

The offload delay timer value may be indicated to a WTRU, e.g., in one or more of the messages. The messages may be included, for example, as part of network assistant information, as part of explicit Wi-Fi connection command, as part of RRC messages that initiate inter-RAT PS handover, or as a part of RRC messages that may initiate CSFB, e.g., if before the timer expires, e.g., the Wi-Fi connection is lost or the WTRU is brought back to LTE and/or the Wi-Fi offloading may not be necessary and the WTRU may stop the timer. The eNB may indicate the delay timer value to the WTRUs that may have Wi-Fi offloading capabilities, e.g., MAPCON and/or IFOM capable.

The RAN may indicate a Wi-Fi Offloading Threshold value to a WTRU. The WTRU may start the offloading, e.g., if the target Wi-Fi signal strength is better than the threshold. The threshold value may be the RSSI value or other possible measurements of Wi-Fi signal. The offloading threshold value may be indicated to the WTRU.

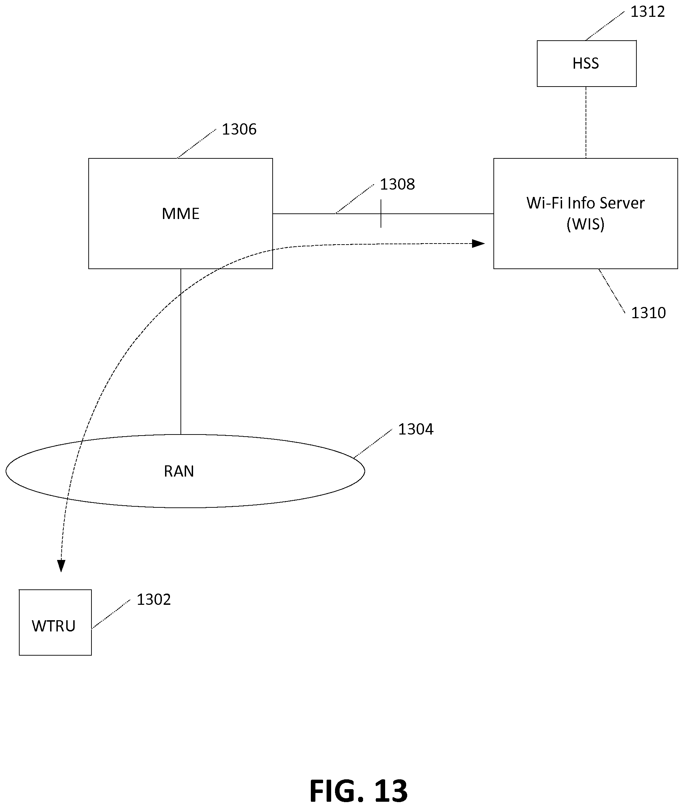

Interaction with the core-network may be provided. As illustrated in exemplary FIG. 13, a Wi-Fi Information Server (WIS) 1310 may be connected to the MME 1306. The WIS 1310 may be the same or different logical node as the Wi-Fi entity as described herein.

A connection and/or an interface 1308 between the MME 1306 and the WIS1310 may be provided. The interface may be based on a protocol, e.g., Internet Protocol (IP). The MME may connect to one or more WISs. A WTRU's subscription information may include information about the WIS the MME may contact for the WTRU. This information may be downloaded and/or provided to an MME from the HSS or from a source MME/SGSN during an inter-MME or inter-SGSN handover to a different MME. The WIS 1310 may connect to the HSS 1312 from which the WIS 1310 may download information specific for one or more, or each of the WTRUs, e.g. the list of APs that may be allowed to be accessed by the WTRU. The WIS 1310 may hold a unique identifier of one or more WTRUs, for example, an IMSI.

A WTRU may communicate non-3GPP access information (e.g., Wi-Fi info) with the WIS, e.g., using one or more NAS messages. An NAS (e.g., a new NAS) message may be defined for this purpose, or existing NAS messages may be modified to be used for this purpose (e.g. the GENERIC UPLINK NAS TRANSPORT for UE-to-WIS communication, and the GENERIC DOWNLINK NAS TRANSPORT message for WIS-to-UE communication). The WIS 1310 may include one or more of the information described in the previous sections.

The Wi-Fi information communication may be provided according to at least one of WTRU requesting information about Wi-Fi APs, the WIS pushing information to a WTRU, or a WTRU periodically requesting updates for Wi-Fi information.

The WTRU 1302 may request information about Wi-Fi APs (e.g., the previously mentioned or proposed information) around a given cell, CSG cell, or in a given location area, or local network. The WIS 1310 may push information to the WTRU 1310, e.g., when the WTRU is in connected mode or when the WTRU enters a given cell, or CSG cell, or in a given location area, or a local network. The WTRU 1302 may request (e.g., periodically request) updates for Wi-Fi info, or the WIS 1310 may push (e.g., periodically push) information to the WTRU 1302, e.g., if the WTRU 1302 is in idle mode which may trigger the MME 1306 to page the WTRU 1302 or inform the WIS 1312 when the WTRU 1302 is in connected mode.

The MME 1306 may inform the WIS 1310 that the WTRU 1302 is in connected mode. The MME 1306 may inform the WIS 1310 anytime or at determined times that the WTRU 1302 goes to connected mode, which may occur even if it is for the purpose of signaling, e.g. to perform a periodic Tracking Area Update. The MME 1306 may inform the WIS 1310 about the cell's identity for the cell currently serving the WTRU 1302. The MME 1306 may update the WIS 1310 with the WTRU's location (e.g., new location) or cell after a handover. The WIS 1310 may have information about Wi-Fi APs that exist in or around a cell that is serving the WTRU 1302.

One or more of the information, indications, or commands described herein to be provided by the eNB may apply for the WIS, e.g., the WIS may also provide this information or indications or commands (e.g. to start Wi-Fi offload) to the WTRU. For example, this may be done by forwarding a message to the MME, which may forward the contents to the WTRU, e.g., in a NAS message.

The WIS and the MME may exchange an identifier for the WTRU that may be used, as long as the WTRU is registered in the system. For example, the MME may provide the WIS with the S-TMSI or GUTI that may have been allocated by the MME (although any other identifier may be used between the MME and the WIS). The MME and the WIS may use the agreed identity, e.g. S-TMSI, so that the correct WTRU may be contacted or identified, e.g., when exchanging messages for a WTRU.

The WIS may provide the eNB (e.g., via the MME) with the list of APs and may provide other information (e.g. such as features disclosed herein) that may help the WTRU to detect and associate with an AP. The eNB may use the provided information to configure the WTRU to scan for Wi-Fi APs, connect to Wi-Fi APs, and/or to provide security parameters for detected Wi-Fi APs, etc. The WIS may indicate to the MME to forward a set of information to the serving eNB. The MME may forward information to a serving eNB, for example, in any S1AP message, e.g. WTRU Context Modification Request. A new (e.g., previously unused) S1AP message may be defined. The WIS may provide information about Wi-Fi APs that may affect one or more WTRU's and the MME may provide this information in any S1AP management message, e.g. a message that may not be specific to one WTRU.

The WTRU may display to the user that traffic is being offloaded via Wi-Fi, e.g., at a time during the offload. The user may change the settings in the WTRU such that an autonomous decision by the network (e.g. eNB) to offload traffic may be disabled. The WTRU may send such information to the eNB, e.g., via RRC messages (new or existing) or to the MME, e.g., via an NAS message (e.g., a new or an existing NAS message).

The MME may send a notification to the eNB to stop using Wi-Fi offload. This indication may be sent in an S1AP (e.g., new or existing) message, e.g., on reception of an indication to stop autonomous offload by the network, or other conditions as disclosed herein. The eNB may stop offloading traffic over Wi-Fi, e.g., on reception of an indication to stop autonomous Wi-Fi offload (e.g. from the WTRU or from the MME).

The source cell or the source MME may inform the target cell whether it may be allowed to perform autonomous Wi-Fi offload for the WTRU, e.g., on handover of a WTRU to a target cell, among other conditions.

The WTRU (e.g. based on setting changes by the user possibly due to noticeable degradation of quality of service) may send an indication to the eNB (e.g., using RRC messages) or to the MME (e.g., using NAS messages) to restart offload. The MME may send an indication to the eNB, e.g., on reception (e.g. by the MME from the UE) of an indication that autonomous Wi-Fi offload may be allowed. The MME may indicate to the eNB that autonomous Wi-Fi offload may be provided. Such an indication may provide a trigger to the eNB to start Wi-Fi offload, e.g., based on policies or rules in the eNB, for example.

The request from the WTRU to start or stop autonomous offload may be sent to the WIS, e.g., either directly by the WTRU or via the MME. For example, when autonomous Wi-Fi offload is not desired by the WTRU, the MME may indicate so to the WIS and hence the MME may stop providing notifications to the WIS about the UE's location. The WIS may stop sending the WTRU notifications or information about Wi-Fi AP. The WIS may still send the WTRU information about Wi-Fi APs, e.g., optionally due to WTRU location (e.g., cell level) updates received from the MME.

One of ordinary skill in the art will appreciate that each feature or element can be used alone or in any combination with the other features and elements. In addition, the methods described herein may be implemented in a computer program, software, or firmware incorporated in a computer-readable medium for execution by a computer or processor. Examples of computer-readable media include electronic signals (transmitted over wired or wireless connections) and computer-readable storage media. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, WTRU, terminal, base station, RNC, or any host computer.

## Claims

1. A method implemented in a wireless transmit/receive unit, WTRU, and directed to utilizing a cellular-based and wireless local area network, WLAN, based radio access technologies, RATs, to support aggregation of cellular and WLAN carriers, the method comprising:
receiving, from a first radio access node utilizing the cellular-based RAT, a WLAN measurement object and reporting criteria for configuring an event for triggering a WLAN measurement report, wherein the WLAN measurement object comprises a first set of WLAN identifiers identifying a set of radio access nodes that utilize the WLAN-based RAT;
detecting the configured event for triggering a WLAN measurement report;
generating and sending the WLAN measurement report to the first radio access node, wherein the WLAN measurement report comprises a plurality of the first set of WLAN identifiers and a received signal strength indicator, RSSI, for each of the plurality of the first set of WLAN identifiers;
receiving, from the first radio access node while in radio resource control, RRC, connected mode, a message comprising a second set of WLAN identifiers identifying a plurality of candidate radio access nodes that utilize the WLAN-based RAT, wherein the second set of WLAN identifiers corresponds to at least a subset of the reported plurality of WLAN identifiers;
selecting one or more candidate radio access nodes of the plurality of candidate radio access nodes;
attempting to connect to the selected one or more candidate radio access nodes for cellular and WLAN carrier aggregation; and
on condition of WLAN connection failure:
generating a connection status report; and
sending the connection status report to the first radio access node.

2. The method of claim 1, wherein each WLAN identifier comprises any of: a service set identifier, SSID, and a basic service set identifier, BSSID.

3. The method of claim 1, wherein the connection status report comprises (i) an indication of a WLAN connection failure, and (ii) a cause of the WLAN connection failure.

4. The method of claim 1, further comprising:
generating, and sending to the first radio access node, a connection status report on a condition that the WLAN connection succeeded, wherein the connection status report comprises an indication of a successful connection with the WLAN.

5. The method of claim 1, further comprising:
on the condition of WLAN connection failure, suspending a data bearer associated with the WLAN connection.

6. The method of claim 1, wherein the cellular-based RAT is any of a long-term evolution, LTE, access technology and an LTE-Advanced access technology.

7. The method of claim 1, wherein the WTRU is RRC connected pursuant to a connection established via the first radio access node.

8. A wireless transmit/receive unit, WTRU, adapted to utilize a cellular-based and wireless local area network, WLAN, based radio access technologies, RATs, to support aggregation of cellular and WLAN carriers, the WTRU comprising a receiver, a processor and a transmitter, wherein:
the receiver is configured to receive a WLAN measurement object and reporting criteria for configuring an event for triggering a WLAN measurement report, from a first radio access node utilizing a cellular-based radio access technology, RAT, wherein the WLAN measurement object comprises a first set of WLAN identifiers identifying a set of radio access nodes that utilize a WLAN-based RAT;
the processor is configured to:
detect the configured event for triggering a WLAN measurement report; and
generate the WLAN measurement report, wherein the WLAN measurement report comprises a plurality of the first set of WLAN identifiers and a received signal strength indicator, RSSI, for each of the plurality of the first set of WLAN identifiers;
the transmitter is configured to send the WLAN measurement report to the first radio access node;
the receiver is configured to receive, from the first radio access node while in radio resource control, RRC, connected mode, a message comprising a second set of WLAN identifiers identifying a plurality of candidate radio access nodes that utilize the WLAN-based RAT, wherein the second set of WLAN identifiers correspond to at least a subset of the reported plurality of WLAN identifiers; and
the processor is configured to:
select one or more candidate radio access nodes of the plurality of candidate radio access nodes;
attempt to connect to the selected one or more candidate radio access nodes for cellular and WLAN carrier aggregation; and
on condition of WLAN connection failure, generate a connection status report; and
the transmitter is configured to send the connection status report to the first radio access node.

9. The WTRU of claim 8, wherein each WLAN identifier comprises any of a service set identifier, SSID, and a basic service set identifier, BSSID.

10. The WTRU of claim 8, wherein the connection status report comprises (i) an indication of a WLAN connection failure, and (ii) a cause of the WLAN connection failure.

11. The WTRU of claim 8, wherein:
the processor is configured to generate a connection status report on a condition that the WLAN connection succeeded, wherein the connection status report comprises an indication of a successful connection with the WLAN; and
the transmitter is configured to send the connection status report to the first radio access node.

12. The WTRU of claim 8, wherein:
on the condition of WLAN connection failure, the processor is configured to suspend a data bearer associated with the WLAN connection.

13. The WTRU of claim 8, wherein the cellular-based RAT is any of a long-term evolution, LTE, access technology and an LTE-Advanced access technology.

14. The WTRU of claim 8, wherein the WTRU is RRC connected pursuant to a connection established via the first radio access node.

## Patentansprüche

1. Verfahren, das in einer Drahtlos-Sende- und -Empfangseinheit (Wireless Transmit/Receive Unit, WTRU) implementiert wird und zur Nutzung von Mobilfunk-basierten und Wireless Local Area Network (WLAN)-basierten Funkzugangstechnologien (Radio Access Technologies, RATs) dient, um die Aggregation von Mobilfunk- und WLAN-Trägern zu unterstützen, wobei das Verfahren Folgendes umfasst:
Empfangen, von einem ersten Funkzugangsknoten, der die Mobilfunkbasierte RAT nutzt, eines WLAN-Messungsobjekts und von Berichtskriterien zum Konfigurieren eines Ereignisses zum Auslösen eines WLAN-Messungsberichts, wobei das WLAN-Messungsobjekt einen ersten Satz von WLAN-Identifizierern umfasst, die einen Satz von Funkzugangsknoten identifizieren, die die WLAN-basierte RAT nutzen;
Detektieren des konfigurierten Ereignisses zum Auslösen eines WLAN-Messungsberichts;
Generieren und Senden des WLAN-Messungsberichts an den ersten Funkzugangsknoten, wobei der WLAN-Messungsbericht mehrere des ersten Satzes von WLAN-Identifizierern und einen Empfangssignalstärkeindikator (Received Signal Strength Indicator, RSSI) für jeden der mehreren des ersten Satzes von WLAN-Identifizierern umfasst;
Empfangen, von dem ersten Funkzugangsknoten, während eines Radio Resource Control (RRC)-Verbindungsmodus, einer Nachricht, die einen zweiten Satz von WLAN-Identifizierern umfasst, die mehrere in Frage kommende Funkzugangsknoten identifizieren, die die WLAN-basierte RAT nutzen, wobei der zweite Satz von WLAN-Identifizierern mindestens einer Teilmenge der berichteten mehreren WLAN-Identifizierern entspricht;
Auswählen eines oder mehrerer in Frage kommender Funkzugangsknoten aus den mehreren in Frage kommenden Funkzugangsknoten;
Versuchen des Herstellens einer Verbindung mit den ausgewählten einen oder mehreren in Frage kommenden Funkzugangsknoten für Mobilfunk- und WLAN-Trägeraggregation; und
unter der Bedingung des Scheiterns einer WLAN-Verbindung:
Generieren eines Verbindungsstatusberichts; und
Senden des Verbindungsstatusberichts an den ersten Funkzugangsknoten.

2. Verfahren nach Anspruch 1, wobei jeder WLAN-Identifizierer eines von einem Service Set Identifier (SSID) und einem Basis Service Set Identifier (BSSID) umfasst.

3. Verfahren nach Anspruch 1, wobei der Verbindungsstatusbericht (i) einen Hinweis auf das Scheitern einer WLAN-Verbindung und (ii) einen Grund für Scheitern einer WLAN-Verbindung umfasst.

4. Verfahren nach Anspruch 1, das des Weiteren Folgendes umfasst:
Generieren, und Senden an den ersten Funkzugangsknoten, eines Verbindungsstatusberichts unter der Bedingung, dass die WLAN-Verbindung erfolgreich ist, wobei der Verbindungsstatusbericht einen Hinweis auf eine erfolgreiche Verbindung mit der WLAN umfasst.

5. Verfahren nach Anspruch 1, das des Weiteren Folgendes umfasst:
im Fall des Scheiterns einer WLAN-Verbindung einen mit der WLAN-Verbindung verknüpften Datenträger auszusetzen.

6. Verfahren nach Anspruch 1, wobei die Mobilfunk-basierte RAT eines von einer Long-Term Evolution (LTE)-Zugangstechnologie und einer LTE-Advanced-Zugangstechnologie ist.

7. Verfahren nach Anspruch 1, wobei die WTRU gemäß einer über den ersten Funkzugangsknoten hergestellten Verbindung RRC-verbunden ist.

8. Drahtlos-Sende- und -Empfangseinheit (Wireless Transmit/Receive Unit, WTRU), die dafür ausgelegt ist, Mobilfunk-basierte und Wireless Local Area Network (WLAN)-basierte Funkzugangstechnologien (Radio Access Technologies, RATs) zu nutzen, um die Aggregation von Mobilfunk- und WLAN-Trägern zu unterstützen, wobei die WTRU einen Empfänger, einen Prozessor und einen Sender umfasst, wobei:
der Empfänger dafür konfiguriert ist, ein WLAN-Messungsobjekt und Berichtskriterien zum Konfigurieren eines Ereignisses zum Auslösen eines WLAN-Messungsberichts von einem ersten Funkzugangsknoten zu empfangen, der eine Mobilfunk-basierte Funkzugangstechnologie (Radio Access Technologie, RAT) nutzt, wobei das WLAN-Messungsobjekt einen ersten Satz von WLAN-Identifizierern umfasst, die einen Satz von Funkzugangsknotenidentifizieren, die die WLAN-basierte RAT nutzen;
der Prozessor für Folgendes konfiguriert ist:
Detektieren des konfigurierten Ereignisses zum Auslösen eines WLAN-Messungsberichts; und
Generieren des WLAN-Messungsberichts, wobei der WLAN-Messungsbericht mehrere des ersten Satzes von WLAN-Identifizierern und einen Empfangssignalstärkeindikator (Received Signal Strength Indicator, RSSI) für jeden der mehreren des ersten Satzes von WLAN-Identifizierern umfasst;
der Sender dafür konfiguriert ist, den WLAN-Messungsbericht an den ersten Funkzugangsknoten zu senden;
der Empfänger dafür konfiguriert ist, von dem ersten Funkzugangsknoten während des Radio Resource Control (RRC)-Verbindungsmodus, eine Nachricht zu empfangen, die einen zweiten Satz von WLAN-Identifizierern umfasst, die mehrere in Frage kommende Funkzugangsknoten identifizieren, die die WLAN-basierte RAT nutzen, wobei der zweite Satz von WLAN-Identifizierern mindestens einer Teilmenge der berichteten mehreren WLAN-Identifizierern entspricht; und
der Prozessor für Folgendes konfiguriert ist:
Auswählen eines oder mehrerer in Frage kommender Funkzugangsknoten aus den mehreren in Frage kommenden Funkzugangsknoten;
Versuchen des Herstellens einer Verbindung mit den ausgewählten einen oder mehreren in Frage kommenden Funkzugangsknoten für Mobilfunk- und WLAN-Trägeraggregation; und
unter der Bedingung des Scheiterns einer WLAN-Verbindung, Generieren eines Verbindungsstatusberichts; und
der Sender dafür konfiguriert ist, den Verbindungsstatusbericht an den ersten Funkzugangsknoten zu senden.

9. WTRU nach Anspruch 8, wobei jeder WLAN-Identifizierer eines von einem Service Set Identifier (SSID) und einem Basis Service Set Identifier (BSSID) umfasst.

10. WTRU nach Anspruch 8, wobei der Verbindungsstatusbericht (i) einen Hinweis auf das Scheitern einer WLAN-Verbindung und (ii) einen Grund für Scheitern einer WLAN-Verbindung umfasst.

11. WTRU nach Anspruch 8, wobei:
der Prozessor dafür konfiguriert ist, einen Verbindungsstatusbericht unter der Bedingung zu generieren, dass die WLAN-Verbindung erfolgreich ist, wobei der Verbindungsstatusbericht einen Hinweis auf eine erfolgreiche Verbindung mit der WLAN umfasst; und
der Sender dafür konfiguriert ist, den Verbindungsstatusbericht an den ersten Funkzugangsknoten zu senden.

12. WTRU nach Anspruch 8, wobei:
der Prozessor - im Fall des Scheiterns einer WLAN-Verbindung - dafür konfiguriert ist, einen mit der WLAN-Verbindung verknüpften Datenträger auszusetzen.

13. Verfahren nach Anspruch 8, wobei die Mobilfunk-basierte RAT eines von einer Long-Term Evolution (LTE)-Zugangstechnologie und einer LTE-Advanced-Zugangstechnologie ist.

14. WTRU nach Anspruch 8, wobei die WTRU gemäß einer über den ersten Funkzugangsknoten hergestellten Verbindung RRC-verbunden ist.

## Revendications

1. Procédé mis en œuvre dans une unité émettrice-réceptrice sans fil, WTRU, et destiné à l'utilisation de technologies d'accès radio, RAT, à base de réseau local sans fil, WLAN, et à base cellulaire pour la prise en charge d'une agrégation de porteuses cellulaires et WLAN, le procédé comprenant :
la réception, en provenance d'un premier nœud d'accès radio utilisant la RAT à base cellulaire, d'un objet de mesure WLAN et de critères de signalement pour configurer un événement pour le déclenchement d'un rapport de mesure WLAN, dans lequel l'objet de mesure WLAN comprend un premier ensemble d'identifiants WLAN qui identifient un ensemble de nœuds d'accès radio utilisant la RAT à base de WLAN ;
la détection de l'événement configuré pour le déclenchement d'un rapport de mesure WLAN ;
la génération et l'envoi du rapport de mesure WLAN au premier nœud d'accès radio, dans lequel le rapport de mesure WLAN comprend une pluralité du premier ensemble d'identifiants WLAN et un indicateur de force de signal reçu, RSSI, pour chacun de la pluralité du premier ensemble d'identifiants WLAN ;
la réception, en provenance du premier nœud d'accès radio dans un mode connecté de commande de ressources radio, RRC, d'un message comprenant un deuxième ensemble d'identifiants WLAN qui identifient une pluralité de nœuds d'accès radio candidats utilisant la RAT à base de WLAN, dans lequel le deuxième ensemble d'identifiants WLAN correspond à au moins un sous-ensemble de la pluralité signalée d'identifiants WLAN ;
la sélection d'un ou plusieurs nœuds d'accès radio candidats de la pluralité de nœuds d'accès radio candidats ;
la tentative de connexion aux un ou plusieurs nœuds d'accès radio candidats sélectionnés pour une agrégation de porteuses cellulaires et WLAN ; et
en cas d'échec de connexion WLAN :
la génération d'un rapport de statut de connexion ; et
l'envoi du rapport de statut de connexion au premier nœud d'accès radio.

2. Procédé selon la revendication 1, dans lequel chaque identifiant WLAN comprend l'un quelconque d'un identifiant d'ensemble de services, SSID, et d'un identifiant d'ensemble de services de base, BSSID.

3. Procédé selon la revendication 1, dans lequel le rapport de statut de connexion comprend (i) une indication d'un échec de connexion WLAN, et (ii) une cause de l'échec de connexion WLAN.

4. Procédé selon la revendication 1, comprenant en outre :
la génération et l'envoi, au premier nœud d'accès radio, d'un rapport de statut de connexion en cas de réussite de connexion WLAN, dans lequel le rapport de statut de connexion comprend une indication d'une connexion réussie avec le WLAN.

5. Procédé selon la revendication 1, comprenant en outre :
en cas d'échec de connexion WLAN, la suspension d'un support de données associé à la connexion WLAN.

6. Procédé selon la revendication 1, dans lequel la RAT à base cellulaire est l'une quelconque d'une technologie d'accès d'évolution à long terme, LTE, et d'une technologie d'accès LTE avancée.

7. Procédé selon la revendication 1, dans lequel la WTRU est à connexion RRC conformément à une connexion établie par l'intermédiaire du premier nœud d'accès radio.

8. Unité émettrice-réceptrice sans fil, WTRU, apte à l'utilisation de technologies d'accès radio, RAT, à base de réseau local sans fil, WLAN, et à base cellulaire pour la prise en charge d'une agrégation de porteuses cellulaires et WLAN, la WTRU comprenant un récepteur, un processeur et un émetteur, dans laquelle :
le récepteur est configuré pour la réception d'un objet de mesure de réseau local sans fil, WLAN, et de critères de signalement pour configurer un événement pour le déclenchement d'un rapport de mesure WLAN, en provenance d'un premier nœud d'accès radio utilisant une technologie d'accès radio, RAT, à base cellulaire, dans lequel l'objet de mesure WLAN comprend un premier ensemble d'identifiants WLAN qui identifient un ensemble de nœuds d'accès radio utilisant une RAT à base de WLAN ;
le processeur est configuré pour :
la détection de l'événement configuré pour le déclenchement d'un rapport de mesure WLAN ; et
la génération du rapport de mesure WLAN, dans lequel le rapport de mesure WLAN comprend une pluralité du premier ensemble d'identifiants WLAN et un indicateur de force de signal reçu, RSSI, pour chacun de la pluralité du premier ensemble d'identifiants WLAN ;
l'émetteur est configuré pour l'envoi du rapport de mesure WLAN au premier nœud d'accès radio ;
le récepteur est configuré pour la réception, en provenance du premier nœud d'accès radio dans un mode connecté de commande de ressources radio, RRC, d'un message comprenant un deuxième ensemble d'identifiants WLAN qui identifient une pluralité de nœuds d'accès radio candidats utilisant la RAT à base de WLAN, dans laquelle le deuxième ensemble d'identifiants WLAN correspond à au moins un sous-ensemble de la pluralité signalée d'identifiants WLAN ; et
le processeur est configuré pour :
la sélection d'un ou plusieurs nœuds d'accès radio candidats de la pluralité de nœuds d'accès radio candidats ;
la tentative de connexion aux un ou plusieurs nœuds d'accès radio candidats sélectionnés pour une agrégation de porteuses cellulaires et WLAN ; et
en cas d'échec de connexion WLAN, la génération d'un rapport de statut de connexion ; et
l'émetteur est configuré pour l'envoi du rapport de statut de connexion au premier nœud d'accès radio.

9. WTRU selon la revendication 8, dans laquelle chaque identifiant WLAN comprend l'un quelconque d'un identifiant d'ensemble de services, SSID, et d'un identifiant d'ensemble de services de base, BSSID.

10. WTRU selon la revendication 8, dans laquelle le rapport de statut de connexion comprend (i) une indication d'un échec de connexion WLAN, et (ii) une cause de l'échec de connexion WLAN.

11. WTRU selon la revendication 8, dans laquelle :
le processeur est configuré pour la génération d'un rapport de statut de connexion en cas de réussite de connexion WLAN, dans lequel le rapport de statut de connexion comprend une indication d'une connexion réussie avec le WLAN ; et
l'émetteur est configuré pour l'envoi du rapport de statut de connexion au premier nœud d'accès radio.

12. WTRU selon la revendication 8, dans laquelle :
en cas d'échec de connexion WLAN, le processeur est configuré pour la suspension d'un support de données associé à la connexion WLAN.

13. WTRU selon la revendication 8, dans laquelle la RAT à base cellulaire est l'une quelconque d'une technologie d'accès d'évolution à long terme, LTE, et d'une technologie d'accès LTE avancée.

14. WTRU selon la revendication 8, dans laquelle la WTRU est à connexion RRC conformément à une connexion établie par l'intermédiaire du premier nœud d'accès radio.
